# EUROPEAN PATENT SPECIFICATION

(11) **EP 4 303 638 B1**
(45) Date of publication and mention of the grant of the patent: **26.11.2025**
(21) Application number: 23179975.0
(22) Date of filing: 19.06.2023
(51) Int. Cl.: G02B 21/24, G02B 21/36, G02B 25/00

(54) **LENS-BARREL DEVICE AND MICROSCOPE SYSTEM**
LINSENTUBUSVORRICHTUNG UND MIKROSKOPSYSTEM
DISPOSITIF DE BARILLET DE LENTILLE ET SYSTÈME DE MICROSCOPE

(30) Priority: 20.06.2022 JP 2022098913
(43) Date of publication of application: 10.01.2024
(73) Proprietor: Evident Corporation, Nagano 399-0495 (JP)
(72) Inventor: KUSAKA, Kenichi, Tatsuno-machi, Kamiina-gun Nagano 3990495 (JP); TOMIOKA, Masaharu, Tatsuno-machi, Kamiina-gun Nagano 3990495 (JP); UTSUGI, Hironori, Tatsuno-machi, Kamiina-gun Nagano 3990495 (JP); KONO, Takayuki, Tatsuno-machi, Kamiina-gun Nagano 3990495 (JP)
(74) Representative: Schicker, Silvia

(56) References cited:
- EP-A1- 4 009 095
- EP-A2- 0 928 981
- WO-A1-2017/029561
- US-A- 4 567 478
- US-A1- 2021 215 923

## Description

### BACKGROUND OF THE INVENTION

### TECHNICAL FIELD

The disclosure of the present specification relates to a lens-barrel device and a microscope system.

### DESCRIPTION OF THE RELATED ART

In recent years, it has been expected that artificial intelligence (AI) supports tasks performed using a microscope. As a microscope that is capable of providing such AI support, an augmented reality (AR) microscope is known.

The AR microscope is a microscope that conducts a display in such a way that auxiliary information is superimposed onto an optical image of a specimen observed through an eyepiece, and is described in, for example, WO 2018/042413 A and WO 2020/066041 A. The auxiliary information displayed by the AR microscope is typically generated by analyzing an image obtained by imaging the specimen. In particular, by using an AI technique, such as deep learning, for image analysis, it is possible to provide microscope users with advanced support of AI.

EP 4 009 095 A1 describes a lens-barrel device lacking at least the claimed imaging device, the claimed relay optical system and the claimed first reflection optical system. Further prior art can be found in US 2021/215923 A1.

### SUMMARY OF THE INVENTION

Meanwhile, both the microscope systems described in WO 2018/042413 A and WO 2020/066041 A employ a configuration in which an intermediate lens-barrel incorporating a projector is mounted between a lens-barrel and a microscope body portion.

However, the mounting of the intermediate lens-barrel in the microscope causes an eye point to rise by the height of the intermediate lens-barrel. Therefore, there is a possibility of a deterioration in ergonomic characteristics of the system. Furthermore, the mounting of the intermediate lens-barrel causes the extension of a distance between an imaging lens (tube lens) and an objective in the lens-barrel. This raises concerns over negative effects on optical performance of the system, such as image forming performance or an amount of peripheral light.

In view of the actual circumstances described above, an object in one aspect of the present invention is to provide an AR display function of superimposing auxiliary information onto an optical image while maintaining high ergonomic characteristics.

A lens-barrel device in one aspect of the present invention is a lens-barrel device that is attachable to a microscope body, the lens-barrel device including: an eyepiece sleeve that an eyepiece is attachable to; an imaging lens that a light flux from the microscope body is made incident on, the lens-barrel device having been attached to the microscope body, and the light flux being a parallel light flux that has passed through an objective attached to the microscope body; a relay optical system that relays a primary image to an object plane of the eyepiece attached to the eyepiece sleeve, and forms a secondary image, the primary image having been formed by the imaging lens; a first reflection optical system that reflects and bends the light flux from the imaging lens in a first horizontal direction; a second reflection optical system that is disposed on a first horizontal plane where the first reflection optical system is disposed, the second reflection optical system reflecting and bending the light flux that has passed through the first reflection optical system, in a vertically upward direction; a third reflection optical system that is disposed on a second horizontal plane that is different from the first horizontal plane, the third reflection optical system reflecting and bending the light flux that has passed through the second reflection optical system, in a second horizontal direction; an additional optical system that transmits the light flux for forming an image that is different from the secondary image, on the object plane of the eyepiece; and an optical element that is disposed on the second horizontal plane, and guides the light flux from the additional optical system to a light path to the object plane of the eyepiece.

A microscope system in one aspect of the present invention includes: a microscope body; an objective; an eyepiece; an imaging device; and a lens-barrel device that is attachable to the microscope body, in which the lens-barrel device includes: an eyepiece sleeve that the eyepiece is attachable to; an imaging lens that a light flux from the microscope body is made incident on, the lens-barrel device having been attached to the microscope body, and the light flux being a parallel light flux that has passed through the objective attached to the microscope body; a relay optical system that relays a primary image to an object plane of the eyepiece attached to the eyepiece sleeve, and forms a secondary image, the primary image having been formed by the imaging lens; a first reflection optical system that reflects and bends the light flux from the imaging lens in a first horizontal direction; a second reflection optical system that is disposed on a first horizontal plane where the first reflection optical system is disposed, the second reflection optical system reflecting and bending the light flux that has passed through the first reflection optical system, in a vertically upward direction; a third reflection optical system that is disposed on a second horizontal plane that is different from the first horizontal plane, the third reflection optical system reflecting and bending the light flux that has passed through the second reflection optical system, in a second horizontal direction; an additional optical system that transmits the light flux for forming an image that is different from the secondary image, on the object plane of the eyepiece; and an optical element that is disposed on the second horizontal plane, and guides the light flux from the additional optical system to a light path to the object plane of the eyepiece.

In the aspects described above, the AR display function can be provided while high ergonomic characteristics are maintained.

### BRIEF DESCRIPTION OF THE DRAWINGS

FIG. 1 is a diagram illustrating a configuration of a microscope system according to an embodiment;
FIG. 2 is a diagram for explaining an optical system in a lens-barrel device;
FIG. 3 is a diagram for explaining a two-hierarchy configuration in the lens-barrel device;
FIG. 4 is a diagram for explaining rotation of an image;
FIG. 5 is a perspective view illustrating a configuration of a lens-barrel device according to a first embodiment;
FIG. 6 is a top view illustrating a configuration of a first hierarchy portion of the lens-barrel device according to the first embodiment;
FIG. 7 is a top view illustrating a configuration of a second hierarchy portion of the lens-barrel device according to the first embodiment;
FIG. 8 is a side view illustrating a configuration of the lens-barrel device according to the first embodiment;
FIG. 9 is a diagram illustrating an example indicating a configuration for providing a light path length in the lens-barrel device;
FIG. 10 is a diagram illustrating a light path in a horizontal direction that is employed by the lens-barrel device according to the first embodiment;
FIG. 11 illustrates an example of an image observed through an eyepiece according to the first embodiment;
FIG. 12 illustrates another example of the image observed through the eyepiece according to the first embodiment;
FIG. 13 illustrates yet another example of the image observed through the eyepiece according to the first embodiment;
FIG. 14 illustrates an example of an image observed through the eyepiece in a variation;
FIG. 15 is a diagram illustrating a configuration of a slider to which a first reflection optical system is fixed;
FIG. 16 is a perspective view illustrating a configuration of a lens-barrel device according to a second embodiment;
FIG. 17 is a top view illustrating a configuration of a first hierarchy portion of the lens-barrel device according to the second embodiment;
FIG. 18 is a top view illustrating a configuration of a second hierarchy portion of the lens-barrel device according to the second embodiment;
FIG. 19 is a side view illustrating a configuration of the lens-barrel device according to the second embodiment;
FIG. 20 is a diagram illustrating a light path in the horizontal direction that is employed by the lens-barrel device according to the second embodiment;
FIG. 21 is a perspective view illustrating a configuration of a lens-barrel device according to a third embodiment;
FIG. 22 is a side view illustrating a configuration of a lens-barrel device according to a fourth embodiment;
FIG. 23 is a diagram illustrating a configuration of a microscope system according to another embodiment; and
FIG. 24 illustrates an example of an image observed through an eyepiece in the microscope system illustrated in FIG. 23.

### DETAILED DESCRIPTION

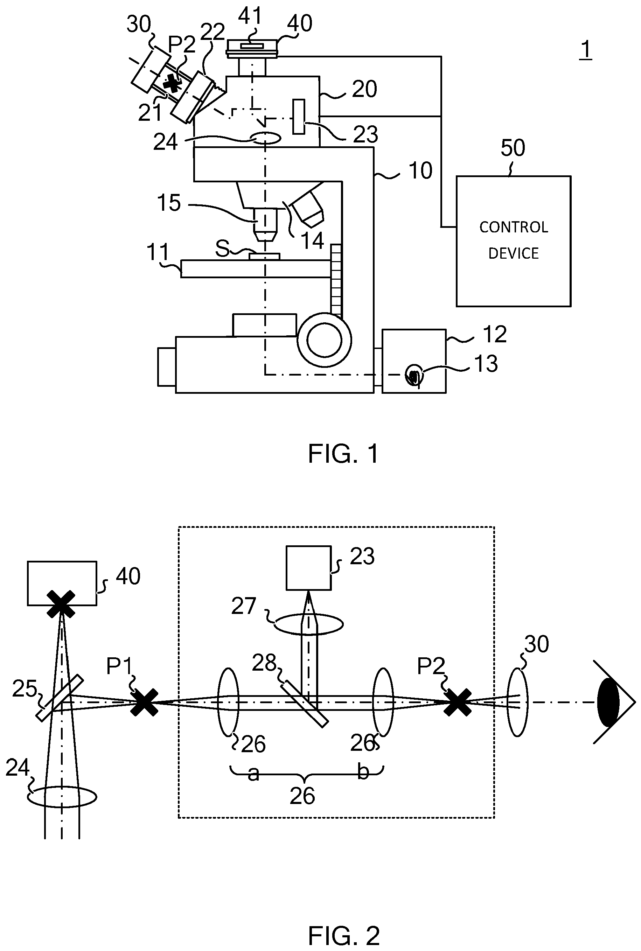

FIG. 1 is a diagram illustrating a configuration of a microscope system 1 according to an embodiment. The microscope system 1 is a microscope system that includes a lens-barrel device 20 having the AR display function. The microscope system 1 may be, for example, a biological microscope system, or may be an industrial microscope system.

The microscope system 1 includes a microscope and a control device 50 that controls the microscope, as illustrated in FIG. 1. The microscope is provided with a microscope body 10, a lens-barrel device 20 that is attachable to the microscope body 10, an eyepiece 30, and an imaging device 40. FIG. 1 illustrates an upright microscope, but the microscope included in the microscope system 1 may be an inverted microscope.

The microscope body 10 includes a stage 11 on which a specimen S is disposed, a lamp house 12 that houses a light source 13, and a revolver 14 that is mounted with an objective 15. The lens-barrel device 20 is mounted on the microscope body 10. Furthermore, the eyepiece 30 and the imaging device 40 are mounted on the lens-barrel device 20.

The stage 11 is connected to a focusing handle by a rack-and-pinion mechanism. A rotary movement of the focusing handle is converted into a linear movement of the stage 11 by the rack-and-pinion mechanism. Therefore, the stage 11 moves upward or downward according to rotation of the focusing handle. The stage 11 is an example of a focusing mechanism that adjusts a position of a focal plane of the objective 15 relative to the specimen S in an optical axis direction of the objective 15.

Furthermore, the stage 11 includes an XY stage that moves in a direction orthogonal to the optical axis direction of the objective 15. A not-illustrated handle is operated, and therefore the stage 11 moves in the direction orthogonal to the optical axis direction of the objective 15. Note that the stage 11 includes an opening through which illumination light from a condenser passes, and that has a size large enough to prevent the specimen S from falling.

The lamp house 12 includes the light source 13 that emits illumination light that is applied to the specimen S. A not-illustrated power supply switch is turned on, and this turns on the light source 13. The power supply switch is turned off, and this turns off the light source 13.

The light source 13 is, for example, a halogen lamp or the like. Illumination light emitted from the light source 13 is applied to the specimen S that is disposed on the stage 11, through the condenser provided in the microscope body 10. An amount of the illumination light emitted from the stage 11 can be adjusted by using a dial provided in the microscope body 10. The amount of the illumination light emitted from the light source 13 is controlled according to the rotation of the dial that functions as a light control input unit.

The revolver 14 can be mounted with a plurality of objectives, and it is desirable that the revolver 14 be mounted with a plurality of objectives that is different in magnification from each other. The rotation of the revolver 14 switches objectives disposed on a light path of the microscope. The revolver 14 is an example of a switching mechanism that switches objectives.

The lens-barrel device 20 is a trinocular lens-barrel that the eyepiece 30 and the imaging device 40 can be attached to. Light from the specimen S irradiated with the illumination light enters the lens-barrel device 20 through the objective 15. The light that has entered the lens-barrel device 20 is split into light that will reach the eyepiece 30 and light that will reach the imaging device 40 in the lens-barrel device 20.

The lens-barrel device 20 includes an eyepiece sleeve 21, a rotational movement unit 22, a projector 23, and an imaging lens (tube lens) 24. The eyepiece 30 can be attached to the eyepiece sleeve 21. The eyepiece sleeve 21 is provided in the rotational movement unit 22. The rotational movement unit 22 rotationally moves in a tilt direction around an axis in a horizontal direction. The eyepiece 30 mounted on the eyepiece sleeve 21 rotationally moves together with the rotational movement unit 22, and this adjusts the height of an eye point.

The projector 23 is an example of a superimposition device that superimposes auxiliary information onto an image plane (a secondary image plane P2) on which an optical image of the specimen S is formed. The projector 23 may be a liquid crystal projector using a liquid crystal device, or may be an organic EL projector using an organic EL device or a DMD (registered trademark) projector.

A light flux from the microscope body 10 enters the imaging lens 24. The imaging lens 24 converges a parallel light flux that has entered through the objective 15. A splitter then splits a convergent light flux into light that will reach the eyepiece 30 and light that will reach the imaging device 40. The light that has reached the imaging device 40 is formed as an image on an imaging plane of an image sensor 41. On the other hand, the light that has reached the eyepiece 30 is formed as an image twice in the lens-barrel device 20, and enters the eyepiece 30, in order to provide the AR display function to a microscope user. This point will be described in detail later with reference to FIG. 2.

The eyepiece 30 is mounted on the eyepiece sleeve 21 provided in the lens-barrel device 20. The imaging device 40 is, for example, a digital camera including the image sensor 41. The imaging device 40 images the specimen S, and obtains an image of the specimen S. The image sensor 41 is a CCD, a CMOS, or the like. The imaging device 40 is attached to the lens-barrel device 20, and therefore the imaging device 40 is provided on an imaging light path that has branched from a visual observation light path from the objective 15 through the imaging lens 24 to the eyepiece 30.

The control device 50 is a device that controls the microscope. The control device 50 controls, for example, the projector 23 included in the microscope. In FIG. 1, the control device 50 is illustrated as a single device, but the control device 50 may be a set of two or more devices. The control device 50 may include, for example, a control box dedicated to microscope control and a general-purpose computer.

FIG. 2 is a diagram for explaining an optical system in the lens-barrel device 20. A configuration suitable for providing the AR display function is described below with reference to FIG. 2. As illustrated in FIG. 2, the lens-barrel device 20 further includes a splitter 25, a relay optical system 26, a projection lens 27, and a half mirror 28.

From among light fluxes that have been converged by the imaging lens 24 and have been split by the splitter 25, a light flux that has reached the imaging device 40 is formed as an image with no change on the imaging plane of the imaging device 40. On the other hand, from among the convergent light fluxes that have been split by the splitter 25, a light flux that has reached the eyepiece 30 is formed as an image before the relay optical system 26 that is disposed in a rear stage of the splitter 25, and a primary image is formed on a primary image plane P1.

Moreover, the relay optical system 26 relays the primary image formed by the imaging lens 24 to an object plane of the eyepiece 30 attached to the eyepiece sleeve 21, and forms a secondary image. More specifically, a relay lens 26a temporarily converts light from the primary image plane P1 into a parallel light flux, and then a relay lens 26b converts the parallel light flux to a convergent light flux, and therefore the secondary image is formed. Stated another way, the object plane of the eyepiece 30 is the secondary image plane P2 of the specimen S, and a microscope user observes, through the eyepiece 30, the secondary image formed on the secondary image plane P2.

Light from the projector 23 is combined with the parallel light flux by the half mirror 28 that is disposed on a light path between the relay lens 26a and the relay lens 26b that the parallel light flux passes through. More specifically, the light from the projector 23 is converted into a parallel light flux by the projection lens 27, and is combined with a light flux that has entered through the imaging lens 24 by the half mirror 28. As a result of this, the light from the projector 23 is formed as an image on the secondary image plane P2 on which the secondary image of the specimen S is formed, and auxiliary information is superimposed. Accordingly, the microscope user observes, through the eyepiece 30, the auxiliary information together with the secondary image of the specimen S that has been formed on the secondary image plane P2.

Note that the projection lens 27 is an example of an additional optical system through which a light flux for forming an image (auxiliary information) that is different from the secondary image on the object plane of the eyepiece 30 passes. The half mirror 28 is an example of an optical element (hereinafter referred to as a compositing optical element) that guides a light flux from the additional optical system (the projection lens 27) to a light path to the object plane of the eyepiece 30. Instead of the half mirror 28, an arbitrary beam splitter that is different from the half mirror 28 in a ratio of reflected light and transmitted light may be used as the compositing optical element.

In the lens-barrel device 20, it is requested that light from the projector 23 be combined with light from the imaging lens 24, and a space for this purpose is required. The lens-barrel device 20 is provided with the relay optical system 26, and therefore the half mirror 28 can be disposed in a state where a space for light compositing is secured.

Furthermore, the provision of the relay optical system 26 causes light from the projector 23 to be formed as an image on the secondary image plane P2 in contrast to the primary image plane P1. In this configuration, the half mirror 28 that combines the light from the projector 23 with light from the specimen S can be disposed on a light path through which the light from the specimen S travels as a parallel light flux. Therefore, the lens-barrel device 20 can provide the AR display function in a state where the half mirror 28 is prevented from causing ghosts to occur.

Note that in a case where a projector that provides the AR display function is provided in an intermediate lens-barrel, as described in WO 2018/042413 A and WO 2020/066041 A described above, similarly, light from the projector can be combined in a parallel light flux between an objective and an imaging lens. However, in this case, there is a possibility of a deterioration in optical performance due to extension of a distance between the objective and the imaging lens, in comparison with a case where the projector 23 is provided in the lens-barrel device 20. Specifically, the periphery of an image becomes dark, or passage around lenses causes a deterioration in image forming performance. By employing the lens-barrel device 20, a distance between the objective and the imaging lens is not extended, and therefore a deterioration in optical performance can be avoided.

Moreover, a configuration in which the projector is provided in the intermediate lens-barrel, as described in WO 2018/042413 A and WO 2020/066041 A described above, is not suitable for a combination with a configuration in which an imaging device is mounted on a trinocular lens-barrel. An image obtained by the imaging device is used in image analysis or the like, and therefore it is desirable that auxiliary information be not superimposed. However, if the projector is provided in the intermediate lens-barrel, light that has been combined with light from the projector is split by a splitter in the trinocular lens-barrel. Therefore, the auxiliary information is also superimposed onto an image obtained by the imaging device mounted on the trinocular lens-barrel. In contrast, in a configuration in which the relay optical system 26 is provided in the lens-barrel device 20, light from the projector 23 can be combined in a rear stage of the splitter 25. Therefore, light from the projector 23 can be prevented from entering the imaging device 40. Accordingly, a configuration in which the relay optical system 26 is provided in the lens-barrel device 20 is also suitable for configuring the lens-barrel device 20 as a trinocular lens-barrel and utilizing an existing imaging device.

The lens-barrel device 20 having the AR display function has an advantage both in optical performance and in effective utilization of an existing device possessed by a microscope user in comparison with the intermediate lens-barrel having the AR display function, as described above. Furthermore, if the intermediate lens-barrel is mounted, the height of the eye point increases by the height of the lens-barrel, and this sacrifices ergonomic characteristics of the microscope system 1. However, the provision of the projector 23 in the lens-barrel device 20 enables the intermediate lens-barrel to be omitted. Therefore, the lens-barrel device 20 can avoid an increase in height of the eye point that is caused by insertion of the intermediate lens-barrel between the microscope body 10 and the lens-barrel device 20.

On the other hand, the lens-barrel device 20 requires the relay optical system 26 to perform image formation twice in the lens-barrel device 20. Therefore, a light path length from the imaging lens 24 to the eyepiece 30 necessarily increases in comparison with a case where the intermediate lens-barrel is used. If the extended length of the light path length in comparison with the intermediate lens-barrel extends in a vertical direction, an advantage in the height of the eye point over the intermediate lens-barrel is reduced or lost.

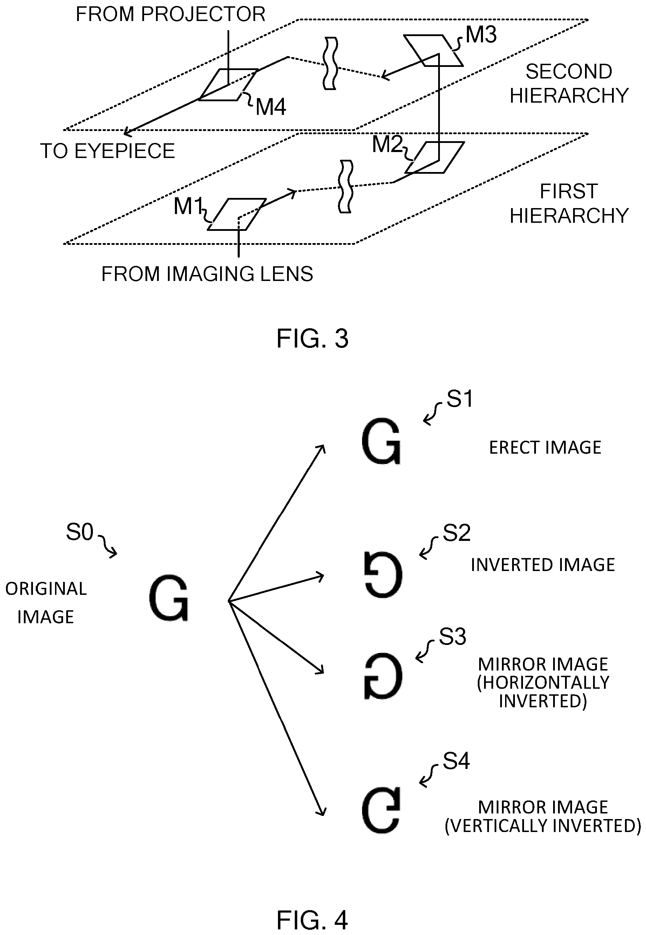

In view of this, the lens-barrel device 20 employs a two-hierarchy configuration in order to reduce the height of the eye point. The two-hierarchy configuration that reduces the height of the eye point is described below with reference to FIG. 3.

FIG. 3 is a diagram for explaining a two-hierarchy configuration in a lens-barrel device. In order to reduce the height of the eye point, it is desirable that a light path extend in the horizontal direction as much as possible to consume the light path length. However, if the light path excessively extends in the horizontal direction, a size in the horizontal direction, that is, a footprint, of the lens-barrel device 20 excessively increases. In view of this, the lens-barrel device 20 employs the two-hierarchy configuration in order to reduce the height of the eye point while housing the lens-barrel device 20 in a limited space. Specifically, as illustrated in FIG. 3, the lens-barrel device 20 includes a first reflection optical system M1, a second reflection optical system M2, and a third reflection optical system M3, and these reflection optical systems achieve the two-hierarchy configuration.

The first reflection optical system M1 reflects and bends a light flux from the imaging lens 24 in a first horizontal direction. The light flux is reflected in the first horizontal direction by the first reflection optical system M1, and therefore a light path extends in the horizontal direction, and a light path length is consumed without an increase in height of the eye point. Note that the first reflection optical system M1 is, for example, the splitter 25. The first reflection optical system M1 may reflect and bend part of the light flux from the imaging lens 24 in the first horizontal direction, and may transmit and guide part of the light flux from the imaging lens 24 to the imaging device 40.

The second reflection optical system M2 is disposed on a first horizontal plane on which the first reflection optical system M1 is disposed, and the second reflection optical system M2 reflects and bends the light flux that has passed through the first reflection optical system M1, in a vertically upward direction. Stated another way, a light path between the first reflection optical system M1 and the second reflection optical system M2 configures a first hierarchy. The light flux is reflected in the vertically upward direction by the second reflection optical system M2, and this can avoid excessive expansion in the horizontal direction of the lens-barrel device 20.

The third reflection optical system M3 is disposed on a second horizontal plane that is different from the first horizontal plane, and the third reflection optical system M3 reflects and bends the light flux that has passed through the second reflection optical system M2, in a second horizontal direction. A light path after the third reflection optical system M3 configures a second hierarchy. The light flux is reflected in the second horizontal direction by the third reflection optical system M3, and therefore the light path extends in the horizontal direction, and the light path length is consumed again without an increase in height of the eye point.

As described above, the lens-barrel device 20 includes the first reflection optical system M1, the second reflection optical system M2, and the third reflection optical system M3 to achieve the two-hierarchy configuration , and can cope with extension of a light path length that is caused by introduction of a relay optical system while avoiding an excessive increase in height of the eye point. Accordingly, by employing the lens-barrel device 20, an advantage in the height of the eye point over the intermediate lens-barrel can be maintained, and the AR display function can be provided while high ergonomic characteristics are maintained.

Moreover, the lens-barrel device 20 includes a compositing optical element M4 that is disposed on the second horizontal plane, as illustrated in FIG. 3. The compositing optical element M4 guides a light flux from the projection lens 27 that has been emitted from the projector 23 to a light path to the object plane of the eyepiece 30. Note that the compositing optical element M4 is, for example, the half mirror 28.

The compositing optical element M4 is disposed on the second horizontal plane above the first horizontal plane, and therefore the projector 23 is also provided in a relatively high position in the lens-barrel device 20. As the projector 23, a projector of an arbitrary scheme can be employed, and a projector of any scheme generates heat. Therefore, in order to avoid deformation of a lens or a mirror in the lens-barrel device 20 and a deterioration in optical performance due to an influence of heat from the projector 23, it is desirable that the projector 23 be disposed in a position that enables heat to efficiently dissipate. Specifically, it is desirable that the projector 23 be disposed near an exterior portion of the lens-barrel device 20, and it is desirable that the projector 23 be disposed in a position that generates a space above the projector 23 in such a way that heat dissipates. In the lens-barrel device 20, the projector 23 is disposed on the second horizontal plane, and this enables heat to dissipate in an upward direction from an upper face of the lens-barrel device 20. Therefore, heat can efficiently dissipate from the projector 23. Accordingly, the lens-barrel device 20 can also avoid a deterioration in optical performance that is caused by heat generation of the projector 23.

As described above, the lens-barrel device 20 includes the projector 23 and the compositing optical element M4 that guides a light flux from the projector 23 to the object plane of the eyepiece 30. The lens-barrel device 20 achieves a two-hierarchy configuration by using the first reflection optical system M1, the second reflection optical system M2, and the third reflection optical system M3, and this can avoid a rise of the eye point. Furthermore, the compositing optical element M4 is disposed in the second hierarchy of the two-hierarchy configuration, and this enables heat generated by the projector 23 to efficiently dissipate. Accordingly, the lens-barrel device 20 can provide the AR display function while high ergonomic characteristics are maintained. Furthermore, various problems caused by heat are avoided, and the AR display function can be provided with high reliability.

A specific example of the lens-barrel device 20 having the two-hierarchy configuration described above is described below in each embodiment. Note that lens-barrel devices described as an example in a first embodiment to a third embodiment are lens-barrel devices that are attached to a biological microscope system used in pathological diagnoses or the like. Furthermore, a lens-barrel device described as an example in a fourth embodiment is a lens-barrel device that is attached to an industrial microscope system. The lens-barrel devices according to the first embodiment to the fourth embodiment are similar to each other in that image formation is performed twice in each of the lens-barrel devices.

FIG. 4 is a diagram for explaining rotation of an image. Lens-barrel devices are roughly classified into an erect image lens-barrel for observing an erect image S1 having the same orientation as an orientation of an original image S0 (for example, the specimen S) and an inverted image lens-barrel for observing an inverted image S2 obtained by vertically and horizontally inverting the original image S0. It is assumed that planar reflection that forms a mirror image is ignored. In this case, the lens-barrel device forms the erect image S1 if image formation is performed even-numbered times, and forms the inverted image S2 if image formation is performed odd-numbered times.

Moreover, every time planar reflection in the horizontal plane occurs, an image is horizontally inverted. Therefore, if planar reflection in the horizontal plane occurs odd-numbered times, the erect image S1 is converted into a mirror image S3. Furthermore, every time planar reflection in a vertical plane occurs, an image is vertically inverted. Therefore, if planar reflection in the vertical plane occurs odd-numbered times, the erect image S1 is converted into a mirror image S4. Accordingly, an orientation of an image formed by the lens-barrel device is determined according to the number of times of image formation, and the number of times of planar reflection in each of the horizontal plane and the vertical plane.

In the pathological market, an inverted image lens-barrel is often used, and pathologists are accustomed to observing inverted images. Accordingly, microscope users overwhelmingly prefer inverted images to erect images, and therefore the lens-barrel devices described as an example in the first embodiment to the third embodiment are configured as an inverted image lens-barrel. These lens-barrel devices perform image formation twice in the lens-barrel devices, and therefore in a case where planar reflection is not taken into consideration, the erect image S1 is formed. In view of this, planar reflection that bends a light path in order to consume a light path length that has been extended according to introduction of the relay optical system is caused to occur odd-numbered times in each of the horizontal direction and the vertical direction in the lens-barrel device. As a result of this, the erect image S1 is inverted in both a leftward/rightward direction and an upward/downward direction in the lens-barrel device, and the inverted image S2 is formed.

On the other hand, for industrial purposes, microscope users prefer erect images, and therefore the lens-barrel device described as an example in the fourth embodiment is configured as an erect image lens-barrel. The lens-barrel device according to the fourth embodiment also performs image formation twice in the lens-barrel device, and therefore in a case where planar reflection is not taken into consideration, the erect image S1 is formed. In view of this, planar reflection that bends a light path in order to consume a light path length that has been extended according to introduction of the relay optical system is caused to occur even-numbered times in each of the horizontal direction and the vertical direction in the lens-barrel device. An influence of planar reflection is eliminated, and therefore the erect image S1 is formed.

### (First Embodiment)

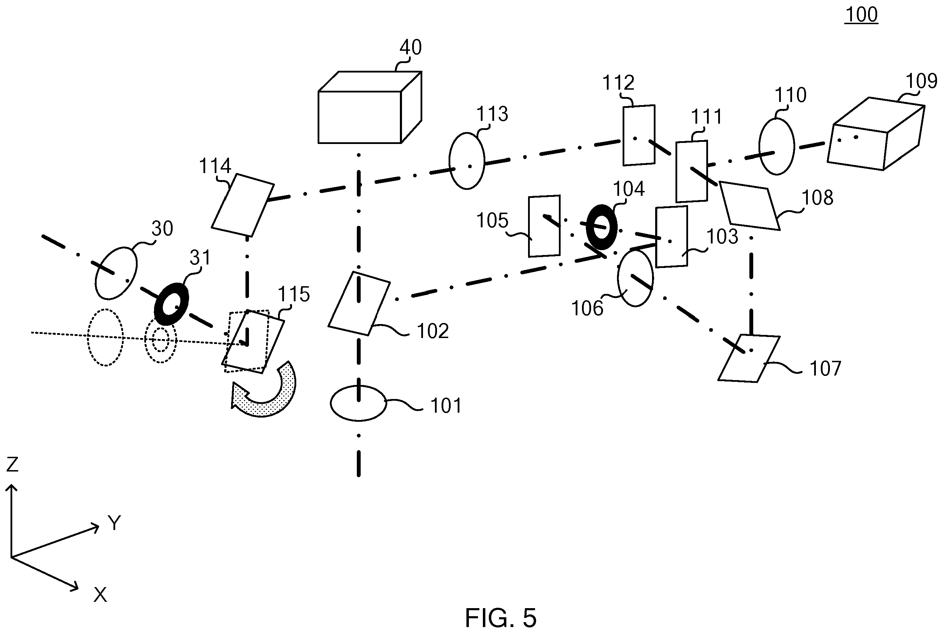

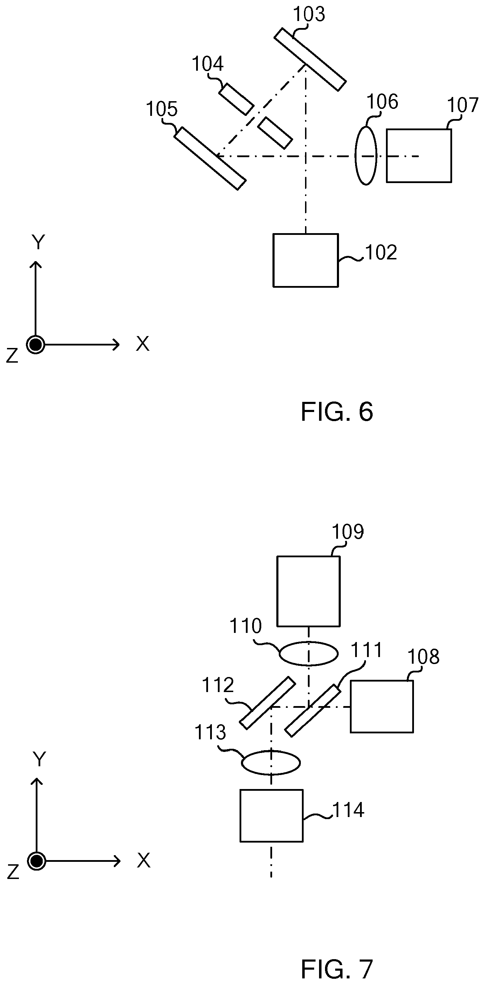

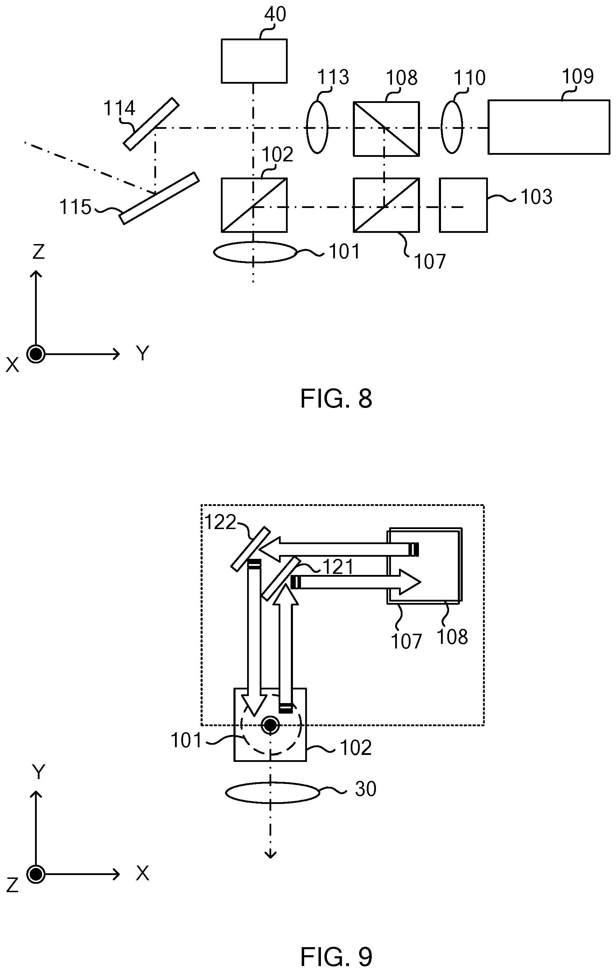

FIG. 5 is a perspective view illustrating a configuration of a lens-barrel device 100 according to the present embodiment. FIG. 6 is a top view illustrating a configuration of a first hierarchy portion of the lens-barrel device 100 according to the present embodiment. FIG. 7 is a top view illustrating a configuration of a second hierarchy portion of the lens-barrel device 100 according to the present embodiment. FIG. 8 is a side view illustrating a configuration of the lens-barrel device 100 according to the present embodiment. A configuration of the lens-barrel device 100 is described with reference to FIGS. 5 to 8.

Note that a Z direction of an orthogonal coordinate system illustrated in FIGS. 5 to 8 is the vertical direction, and an XY direction is the horizontal direction. An X direction is a leftward/rightward direction of a microscope system including the lens-barrel device 100, and a Y direction is a forward/backward direction of the microscope system including the lens-barrel device 100.

The lens-barrel device 100 is, for example, a lens-barrel device that is attachable to a microscope body, and is an inverted image lens-barrel device that forms an inverted image used in a pathological diagnosis or the like. The lens-barrel device 100 is a trinocular lens-barrel that the eyepiece 30 and the imaging device 40 are attached to.

The lens-barrel device 100 includes a relay optical system (a relay lens 106 and a relay lens 113) for securing a space where a compositing optical element 111 is disposed. The compositing optical element 111 is an optical element that guides, to the eyepiece 30, a light flux from a projector 109 that has been converted into a parallel light flux by a projection lens 110. The compositing optical element 111 is disposed on a light path between the relay lens 106 and the relay lens 113, and the parallel light flux passes through the light path. The lens-barrel device 100 includes the relay optical system, and this enables the AR function to be provided to microscope users.

Note that a focal length of the relay lens 106 that configures the relay optical system may be the same as or different from a focal length of an imaging lens 101. However, it is desirable that a magnification of the relay optical system constituted by the relay lens 106 and the relay lens 113 be 1x, and accordingly it is desirable that the relay optical system form a secondary image having a size that is the same as a size of a primary image.

Furthermore, in FIG. 5, only a single visual observation light path to the eyepiece 30 is illustrated for simplification of the drawing, but the lens-barrel device 100 is a trinocular lens-barrel, as described above, and includes two eyepieces 30 for the left eye and for the right eye. A not-illustrated ray branch portion (this includes a beam splitter or the like using a prism) is provided between the mirror 115 described later and the eyepiece 30, but this is not illustrated in FIG. 5. The ray branch portion guides light to each of the eyepieces 30 for the left eye and for the right eye.

Furthermore, the lens-barrel device 100 has a two-hierarchy configuration in order to efficiently consume, in a limited space, a light path length that has been extended due to the relay optical system in comparison with a conventional lens-barrel device, while avoiding a rise of the eye point. Specifically, the two-hierarchy configuration of the lens-barrel device 100 is achieved by including a first reflection optical system 102, a second reflection optical system 107, and a third reflection optical system 108. This enables the lens-barrel device 100 to reduce the height of the eye point without an excessive increase in the footprint.

Furthermore, the lens-barrel device 100 includes the compositing optical element 111 in a second hierarchy serving as an upper layer of the two-hierarchy configuration. This enables the lens-barrel device 100 to efficiently dissipate heat that has been generated by the projector 109 provided near the compositing optical element 111.

More specifically, as illustrated in FIG. 5, the lens-barrel device 100 includes the imaging lens 101 that directs an optical axis in the vertical direction, an optical system that includes the first reflection optical system 102 and the second reflection optical system 107, and is disposed in the first hierarchy, an optical system that includes the third reflection optical system 108, and is disposed in the second hierarchy, and the mirror 115 that is mounted on a shaft of a not-illustrated rotational movement unit that rotationally moves the eyepiece 30 in a tilt direction.

In the lens-barrel device 100, the imaging lens 101 is disposed in a position closest to the microscope body (an objective) in the lens-barrel device 100. This enables the lens-barrel device 100 to efficiently take in light from the microscopic body.

As illustrated in FIGS. 5 and 6, the lens-barrel device 100 includes, as the optical system disposed in the first hierarchy, the first reflection optical system 102, the mirror 103, a field stop 104, the mirror 105, the relay lens 106, and the second reflection optical system 107. Furthermore, as illustrated in FIGS. 5 and 7, the lens-barrel device 100 includes, as the optical system disposed in the second hierarchy, the third reflection optical system 108, the projection lens 110, the compositing optical element 111, a mirror 112, the relay lens 113, and a mirror 114. Furthermore, the projector 109 is also disposed in the second hierarchy.

The first reflection optical system 102 is a beam splitter that splits light from the imaging lens 101 into light that will reach the imaging device 40 and light that will reach the eyepiece 30. In the first reflection optical system 102, planar reflection in the vertical plane occurs. Specifically, the first reflection optical system 102 reflects part of a light flux from the imaging lens 101 to bend it in a first horizontal direction (a Y+ direction), and transmits and guides part of the light flux from the imaging lens 101 to the imaging device 40.

Note that the first horizontal direction is a direction that goes from a front surface of the lens-barrel device 100 provided with an eyepiece sleeve to a back surface of the forward/backward direction of the microscope system. The light flux from the imaging lens 101 is deflected in the first horizontal direction by the first reflection optical system 102, and this can prevent the lens-barrel device 100 from occupying a space on a front surface side where a microscope user is present.

A convergent light flux that has been reflected by the first reflection optical system 102 and travels in the first hierarchy is formed as an image between the mirror 103 and the mirror 105 that each generate planar reflection in the horizontal plane, and enters the relay lens 106 as a divergent light flux. On a primary image plane between the mirror 103 and the mirror 105 on which the imaging lens 101 forms a primary image, the field stop 104 is provided, and serves as a first field stop of the lens-barrel device 100. The diameter of the field stop 104 is, for example, φ22, which is typical as a field of view of a microscope.

Note that the mirror 103 and the mirror 105 include a pair of reflection surfaces that make a direction of an emitted light flux different from a direction of an incident light flux by 90 degrees in the horizontal plane. The pair of reflection surfaces included in the mirror 103 and the mirror 105 bend a light flux that travels in the Y+ direction by 90 degrees in the horizontal plane, and cause the light flux to travel in an X+ direction.

The relay lens 106 is a first relay lens that is included in the relay optical system provided in the lens-barrel device 100, and converts a light flux that has passed through the first reflection optical system 102 into a parallel light flux. Then, the parallel light flux enters the second reflection optical system 107. In the second reflection optical system 107, planar reflection in the vertical plane occurs. As a result of this, the parallel light flux is reflected in a vertically upward direction (a Z+ direction) by the second reflection optical system 107, and enters the third reflection optical system 108.

In the third reflection optical system 108, planar reflection in the vertical plane occurs. As a result of this, the parallel light flux that has passed through the second reflection optical system 107 is reflected in a second horizontal direction (an X-direction) by the third reflection optical system 108. The compositing optical element 111 combines the parallel light flux reflected by the third reflection optical system 108 with a parallel light flux that has been emitted from the projector 109 and has been collimated by the projection lens 110, and then, the parallel light flux enters the mirror 112.

In the mirror 112, planar reflection in the horizontal plane occurs. As a result of this, the combined parallel light flux is reflected in a Y- direction, and enters the relay lens 113. The relay lens 113 is a second relay lens that is included in the relay optical system provided in the lens-barrel device 100. The parallel light flux that has entered the relay lens 113 is converted into a convergent light flux by the relay lens 113, and then enters the mirror 114.

The mirror 114 includes a reflection surface that reflects a light flux that has passed through the third reflection optical system 108 in a downward direction toward the mirror 115 mounted on the shaft of the rotational movement unit. On (the reflection surface of) the mirror 114, planar reflection in the vertical plane occurs. As a result of this, a convergent light flux is reflected in a Z- direction, and enters the mirror 115. In the mirror 115, similarly, planar reflection in the vertical plane occurs. This causes the convergent light flux to be reflected toward the eyepiece 30.

As illustrated in FIGS. 5 and 8, in the lens-barrel device 100, the mirror 114 disposed in the second hierarchy temporarily lowers a light flux, and the mirror 115 then raises the light flux toward the eyepiece 30. This configuration enables the lens-barrel device 100 to cope with various eye points that correspond to microscope users, in accordance with a rotational movement in the tilt direction of the rotational movement unit. Furthermore, a configuration where the mirror 114 temporarily lowers the light flux is also suitable for cancelling a rise of the eye point that is caused by the two-hierarchy configuration employed in order to consume the light path length.

Note that the mirror 115 is a reflection member that rotates around a shaft by half the amount of rotational movement of the rotational movement unit. Rotation of the mirror 115 by half the amount of rotational movement of the rotational movement unit increases (or decreases) each of an angle of incidence of light that enters the mirror 115 from the mirror 114 and an angle of emission of light reflected by the mirror 115, by half the amount of rotational movement. As a result of this, the light that enters the mirror 115 from the mirror 114 is deflected by the mirror 115 by the same angle as the amount of rotational movement of the rotational movement unit, and this enables a light flux to be guided to the eyepiece 30 regardless of the amount of rotational movement.

A convergent light flux reflected by the mirror 115 is formed as an image on the object plane (the secondary image plane) of the eyepiece 30, and enters the eyepiece 30 as a divergent light flux. On the secondary image plane (the object plane of the eyepiece 30) on which the relay optical system forms the secondary image, a field stop 31 is provided, and serves as a second field stop of the lens-barrel device 100. The diameter of the field stop 31 is, for example, φ26.5.

Note that it is desirable that an image that is formed on the secondary image plane and indicates an opening of the field stop 104 be smaller than an opening of the field stop 31. Stated another way, if a magnification of the relay optical system is 1x, it is desirable that the diameter of the field stop 104 be smaller than the diameter of the field stop 31. By making the diameter of the field stop 104 smaller than the diameter of the field stop 31, a region where an optical image (the secondary image) is not projected can be provided in the opening of the field stop 31. By projecting auxiliary information from the projector 109 in the region where the optical image is not projected, the auxiliary information can be displayed with high contrast without an influence of the optical image.

In the lens-barrel device 100 configured as described above, as illustrated in FIG. 8, planar reflection in the vertical plane occurs in the mirror 114 and the mirror 115 for adjusting the height of the eye point, in addition to the first reflection optical system 102, the second reflection optical system 107, and the third reflection optical system 108 that achieve the two-hierarchy configuration. Stated another way, planar reflection occurs odd-numbered times, five times in total. As a result of this, an erect image formed by performing image formation twice can be vertically inverted.

Moreover, in the lens-barrel device 100, planar reflection in the horizontal plane occurs in the mirror 112 provided in the second hierarchy in addition to the mirror 103 and the mirror 105 that are provided in the first hierarchy, as illustrated in FIGS. 6 and 7. Stated another way, planar reflection occurs odd-numbered times, three times in total. As a result of this, an erect image formed by performing image formation twice can also be horizontally inverted.

Accordingly, by employing the lens-barrel device 100, an erect image formed by performing image formation twice is vertically and horizontally inverted, and an inverted image can be finally output. Note that in not-illustrated light paths for the left eye and for the right eye (hereinafter referred to as a binocular light path), reflection in the horizontal direction occurs even-numbered times, and therefore reflection in the binocular light path does not affect an orientation of an image.

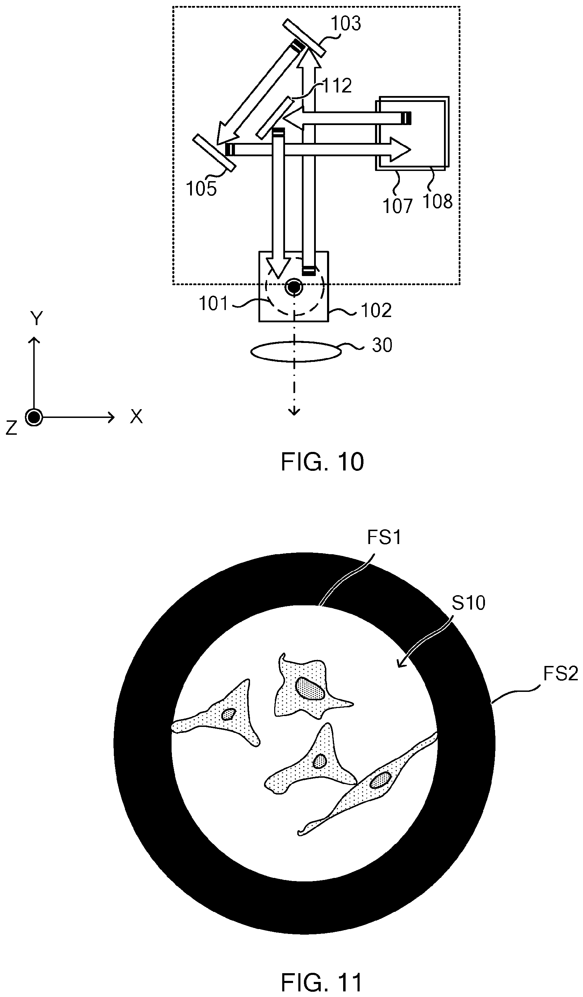

FIG. 9 is a diagram illustrating an example indicating a configuration for consuming a light path length in the lens-barrel device. FIG. 10 is a diagram illustrating a light path in the horizontal direction that is employed by the lens-barrel device 100 according to the present embodiment. Planar reflection in the horizontal plane in the lens-barrel device 100 is described in more detail below with reference to FIGS. 9 and 10.

As described above, in the lens-barrel device 100, it is desirable that a light path length that has been extended due to introduction of the relay optical system be efficiently consumed by using a light path that extends in the horizontal direction. Furthermore, it is desirable to avoid an excessive increase in a footprint of the lens-barrel device 100 or a shape that is excessively long in one direction of the lens-barrel device 100. Moreover, it is requested that a light flux that has been reflected in the horizontal direction by the first reflection optical system 102 that is provided above the imaging lens 101 be finally guided to the eyepiece 30 that is located before the imaging lens 101 (in the Y- direction) in a plan view.

A light path in the horizontal direction that satisfies these requirements is considered. It is conceivable that in the horizontal plane (an XY plane), a light path obtained by combining four light paths in total, a reciprocative light path in the Y direction (a light path in the Y+ direction and a light path in the Y- direction) and a reciprocative light path in the X direction (a light path in the X+ direction and a light path in the X- direction) is designed.

However, in such a light path design, planar reflection in the horizontal plane only occurs twice. Specifically, as illustrated in FIG. 9, at one of three connecting points that connect the four light paths, a combination of the second reflection optical system 107 and the third reflection optical system 108 is disposed, and therefore planar reflection in the horizontal plane only occurs in each of the mirror 121 and the mirror 122 that are disposed at the remaining two connecting points. Accordingly, by employing a combination of the four light paths in total constituted by the reciprocative light path in the Y direction and the reciprocative light path in the X direction, planar reflection does not occur odd-numbered times, and an erect image formed by performing image formation twice fails to be horizontally inverted.

In view of this, in order to cause planar reflection to occur odd-numbered times, the lens-barrel device 100 uses a pair of reflection surfaces that make a direction of an emitted light flux different from a direction of an incident light flux by 90 degrees in the horizontal plane. Specifically, one of two mirrors (the mirror 121 and the mirror 122) illustrated in FIG. 9 that each make a direction of an emitted light flux different from a direction of an incident light flux by 90 degrees in the horizontal plane is replaced with the pair of mirrors described above (the mirror 103 and the mirror 105), as illustrated in FIG. 10, and a 4-shaped light path is formed. Stated another way, a single mirror does not deflect a light flux in a direction that is different by 90 degrees, but a pair of mirrors (a pair of reflection surfaces) deflect the light flux in a direction that is different by 90 degrees.

As a result of this, an oblique light path formed between the pair of mirrors is added to the reciprocative light path in the Y direction and the reciprocative light path in the X direction, and five light paths in total are formed. Planar reflection can be generated at three points excluding one point at which the second reflection optical system 107 and the third reflection optical system 108 are disposed from among four points that connect these five light paths.

As described above, in the lens-barrel device 100, a 4-shaped light path is formed by using a pair of reflection surfaces that make a direction of an emitted light flux different from a direction of an incident light flux by 90 degrees in the horizontal plane, and this enables planar reflection to occur odd-numbered times in the horizontal plane. Therefore, an erect image formed by performing image formation twice can be horizontally inverted. Furthermore, in combination with planar reflection performed odd-numbered times in the vertical plane, as described above, the erect image can be converted into an inverted image, and the inverted image can be output. Accordingly, the lens-barrel device 100 can achieve a lens-barrel device having the AR display function of outputting an inverted image suitable for a biological microscope system.

Furthermore, as illustrated in FIG. 10, in the lens-barrel device 100, it is desirable that one of the pair of reflection surfaces (the mirror 103 and the mirror 105) be disposed in one of two regions sectioned by a plane (hereinafter referred to as a center vertical plane) that includes an optical axis of the imaging lens 101 and a center line of the eyepiece 30, and at least one of the second reflection optical system 107 and the third reflection optical system 108 be disposed in another of the two regions sectioned by the center vertical plane. As described above, by disposing the mirror 105 and the second reflection optical system 107 (the third reflection optical system 108) in regions opposite to each other across the center vertical plane, an eyepiece sleeve can be disposed near the center of the lens-barrel device 100 in comparison with the case illustrated in FIG. 9. Note that the center line of the eyepiece 30 is an optical axis of the eyepiece 30 in the case of a monocular eyepiece 30, and the center line of the eyepiece 30 is a middle line drawn in the middle of optical axes of left-hand and right-hand eyepieces 30 in the case of a binocular eyepiece 30.

Furthermore, as an optical system that inverts an image, a Porro prism is well-known, but an optical system included in the lens-barrel device 100 can be configured more compactly than an optical system using the Porro prism. This is because directions of an incident light flux and an emitted light flux are the same as each other in the Porro prism. Accordingly, for example, if the Porro prism is disposed in such a way that the directions of the incident light flux and the emitted light flux face the vertical direction, it is difficult to reduce the height of the eye point.

FIGS. 11 to 13 illustrates examples of an image observed through the eyepiece 30 according to the present embodiment. Note that a field of view FS1 illustrated in FIGS. 11 to 13 is an image that has been formed on the secondary image plane and indicates an opening of the field stop 104, and indicates a field of view that is limited by the field stop 104 disposed in the primary image plane. Furthermore, a field of view FS2 is an opening of the field stop 31 formed on the secondary image plane, and indicates a field of view that is limited by the field stop 31 disposed in the secondary image plane.

FIG. 11 illustrates an example of an image observed through the eyepiece 30 in a state where a power supply of the projector 109 is in an OFF state. In a state where the power supply of the projector 109 is in the OFF state, only an optical image S10 of the specimen S is projected into the field of view FS1 of the secondary image plane.

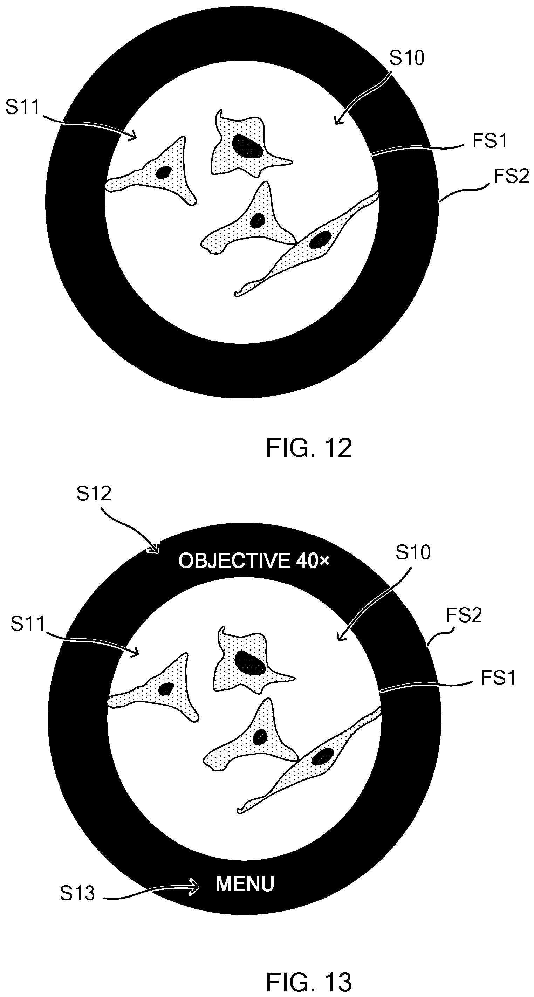

FIG. 12 illustrates an example of an image observed through the eyepiece 30 in a state where the power supply of the projector 109 is in an ON state. In a state where the power supply of the projector 109 is in the ON state, analysis information S11 generated by analyzing an image obtained by the imaging device 40 is projected as auxiliary information onto the secondary image plane, in addition to the optical image S10. In this example, the analysis information S11 is information that marks the nucleus of a cell. For example, the control device 50 analyzes an image obtained by the imaging device 40, by using a learned model that has been trained in advance in machine learning to detect the nucleus of a cell in an image, and the analysis information S11 is generated.

FIG. 13 illustrates another example of the image observed through the eyepiece 30 in a state where the power supply of the projector 109 is in the ON state. FIG. 12 illustrates a case where the auxiliary information is information obtained by analyzing an image obtained by the imaging device 40, but the auxiliary information is not limited to the information obtained by analyzing the image obtained by the imaging device 40. For example, setting information of the microscope system, or the like may be included. FIG. 13 illustrates a situation where setting information S12 has been projected onto the secondary image plane in addition to the analysis information S11. Note that it is desirable that the setting information S12 be projected outside the field of view FS1 and inside the field of view FS2. No optical image has been projected onto this region, and therefore a background is black, and the setting information S12 can be displayed with high contrast.

The present embodiment has been described by using, as an example, a case where the opening of the field stop 104 has a circular shape, but the shape of the opening is not limited to a circular shape. A field stop that is different in a shape of an opening may be used according to purposes. For example, a microscope user may select an arbitrary field stop from a plurality of field stops that is fixed to a slider and is different in the shape of an opening or the size of the opening, and may dispose the field stop on a light path.

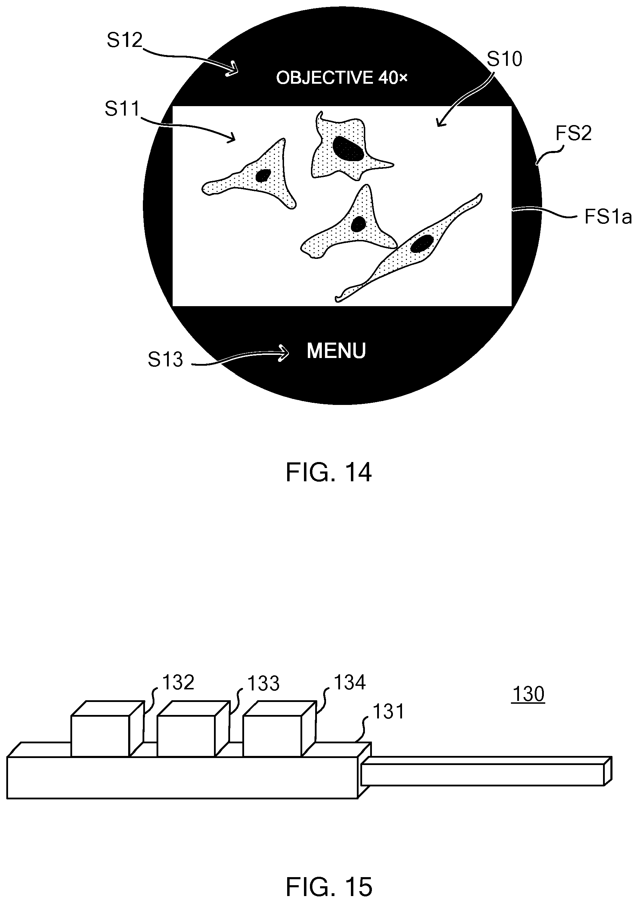

FIG. 14 illustrates an example of an image observed through the eyepiece 30 in a variation. FIG. 14 illustrates an example where a field stop that includes an opening having a rectangular shape is disposed instead of the field stop 104 in the light path. Note that a field of view FS1a illustrated in FIG. 14 is an image that has been formed on the secondary image plane and indicates an opening of a field stop that includes an opening having a rectangular shape, and indicates a field of view that is limited by a field stop disposed in the primary image plane.

FIG. 14 illustrates a situation where a relatively wide region is secured outside the field of view FS1a and inside the field of view FS2, and the setting information S12 and GUI information S13 have been projected onto the region. As described above, field stops may be exchanged according to auxiliary information projected onto the secondary image plane in such a way that microscope users can easily grasp the auxiliary information.

FIG. 15 is a diagram illustrating a configuration of a light path switching mechanism 130. In the present embodiment, an example where the first reflection optical system 102 is fixed on a light path has been described. However, the first reflection optical system 102 may be housed in the light path switching mechanism 130, as illustrated in FIG. 15. The light path switching mechanism 130 houses a plurality of optical elements (an optical element 132, an optical element 133, and an optical element 134) that is fixed onto a slider 131, and selectively disposes any of the plurality of optical elements in a position where a light path to the eyepiece 30 crosses a light path to the imaging device 40. Any of the plurality of optical elements may be the first reflection optical system 102. Specific examples of the optical elements 132, 133, and 134 are described. The optical element 134 is a half prism that can simultaneously perform observation using the eyepiece 30 and imaging using the imaging device 40. The optical element 133 is a prism that only transmits a ray of light to the imaging device 40. The optical element 132 is a prism that only directs a ray of light to a side of the eyepiece 30.

### (Second Embodiment)

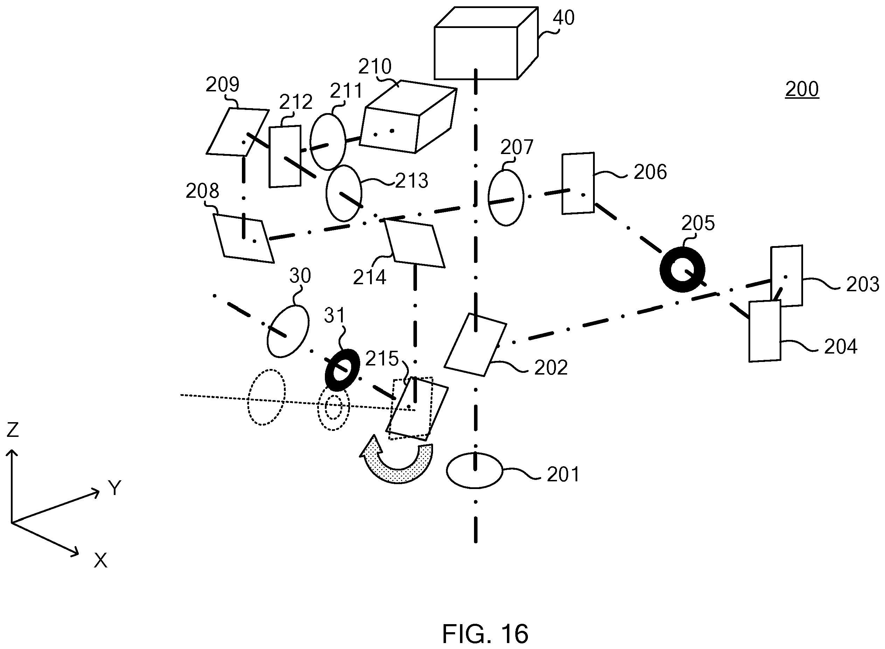

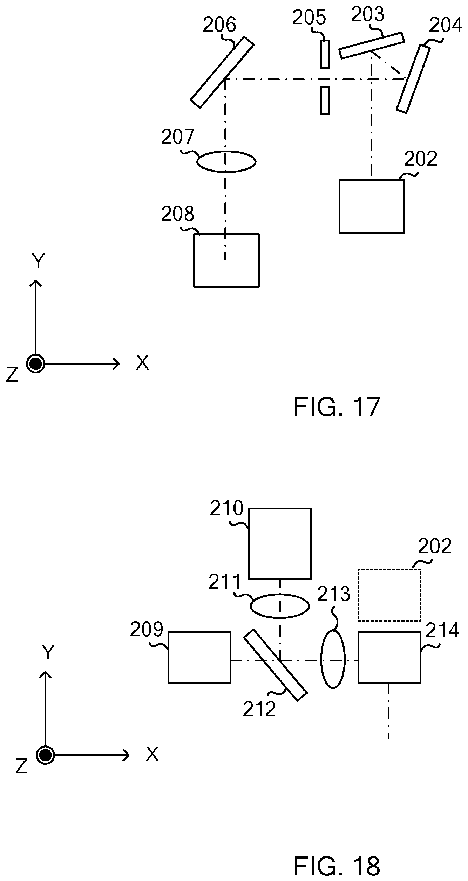

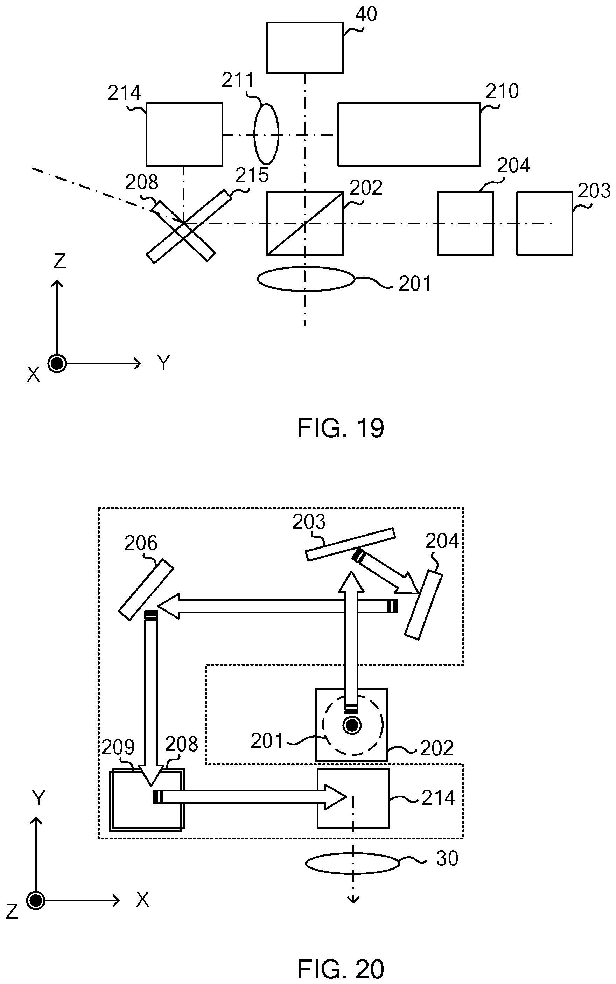

FIG. 16 is a perspective view illustrating a configuration of a lens-barrel device 200 according to the present embodiment. FIG. 17 is a top view illustrating a configuration of a first hierarchy portion of the lens-barrel device 200 according to the present embodiment. FIG. 18 is a top view illustrating a configuration of a second hierarchy portion of the lens-barrel device 200 according to the present embodiment. FIG. 19 is a side view illustrating the configuration of the lens-barrel device 200 according to the present embodiment. FIG. 20 is a diagram illustrating a light path in the horizontal direction that is employed by the lens-barrel device according to the present embodiment. The configuration of the lens-barrel device 200 is described with reference to FIGS. 16 to 20.

The lens-barrel device 200 is a lens-barrel device that is attachable to a microscope body, and is an inverted image lens-barrel device that forms an inverted image used in a pathological diagnosis or the like. Furthermore, the lens-barrel device 200 is a trinocular lens-barrel that the eyepiece 30 and the imaging device 40 are attached to. In this point, the lens-barrel device 200 is similar to the lens-barrel device 100.

The lens-barrel device 200 is also similar to the lens-barrel device 100 in that a relay optical system (a relay lens 207 and a relay lens 213) is included, that a two-hierarchy configuration is achieved by using a first reflection optical system 202, a second reflection optical system 208, and a third reflection optical system 209, and that a compositing optical element 212 is disposed in a second hierarchy.

As illustrated in FIG. 16, the lens-barrel device 200 includes an imaging lens 201 that directs an optical axis in the vertical direction, an optical system that includes the first reflection optical system 202 and the second reflection optical system 208, and is disposed in a first hierarchy, an optical system that includes the third reflection optical system 209, and is disposed in the second hierarchy, and a mirror 215 that is mounted on a shaft of a not-illustrated rotational movement unit that rotationally moves the eyepiece 30 in a tilt direction.

In the lens-barrel device 200, similarly, the imaging lens 201 is disposed in a position closest to the microscope body in the lens-barrel device 200. Furthermore, as illustrated in FIGS. 16 and 17, the lens-barrel device 200 includes, as the optical system disposed in the first hierarchy, the first reflection optical system 202, a mirror 203, a mirror 204, a field stop 205, a mirror 206, the relay lens 207, and the second reflection optical system 208. Furthermore, as illustrated in FIGS. 16 and 18, the lens-barrel device 200 includes, as the optical system disposed in the second hierarchy, the third reflection optical system 209, a projection lens 211, the compositing optical element 212, the relay lens 213, and a mirror 214. Furthermore, a projector 210 is also disposed in the second hierarchy.

In the lens-barrel device 200, as illustrated in FIGS. 16 and 19, planar reflection in the vertical plane occurs in the mirror 214 and the mirror 215 for adjusting the height of an eye point, in addition to the first reflection optical system 202, the second reflection optical system 208, and the third reflection optical system 209 that achieve the two-hierarchy configuration. Stated another way, planar reflection occurs odd-numbered times, five times in total. As a result of this, an erect image formed by performing image formation twice can be vertically inverted. In this point, the lens-barrel device 200 is similar to the lens-barrel device 100.

Furthermore, in the lens-barrel device 200, as illustrated in FIGS. 17 and 18, planar reflection in the horizontal plane occurs in the mirror 203, the mirror 204, and the mirror 206 that are provided in the first hierarchy. Stated another way, planar reflection occurs odd-numbered times, three times in total. As a result of this, an erect image formed by performing image formation twice can also be horizontally inverted. Accordingly, the lens-barrel device 200 can vertically and horizontally invert an erect image formed by performing image formation twice, and can finally output an inverted image. In this point, the lens-barrel device 200 is similar to the lens-barrel device 100.

Moreover, the lens-barrel device 200 is also similar to the lens-barrel device 100 in that a 4-shaped light path (in FIG. 20, a light path having a horizontally inverted 4-shape) is formed by using a pair of reflection surfaces included in the mirror 203 and the mirror 204, and this causes planar reflection in the horizontal plane to occur odd-numbered times, as illustrated in FIG. 20. However, the lens-barrel device 200 is different from the lens-barrel device 100 in that planar reflection in the horizontal plane only occurs in the first hierarchy, but does not occur in the second hierarchy.

The lens-barrel device 200 configured as described above can exhibit effects that are similar to effects of the lens-barrel device 100.

### (Third Embodiment)

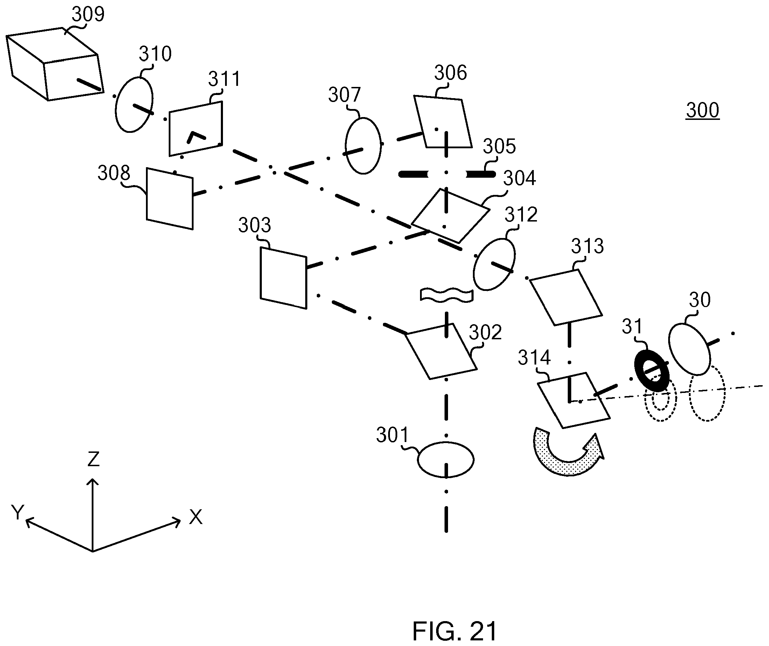

FIG. 21 is a perspective view illustrating a configuration of a lens-barrel device 300 according to the present embodiment. The configuration of the lens-barrel device 300 is described with reference to FIG. 21.

The lens-barrel device 300 is a lens-barrel device that is attachable to a microscope body, and is an inverted image lens-barrel device that forms an inverted image used in a pathological diagnosis or the like. Furthermore, the lens-barrel device 300 is a trinocular lens-barrel that the eyepiece 30 and the imaging device 40 are attached to. In this point, the lens-barrel device 300 is similar to the lens-barrel device 100 and the lens-barrel device 200.

The lens-barrel device 300 is also similar to the lens-barrel device 100 and the lens-barrel device 200 in that a relay optical system (a relay lens 307 and a relay lens 312) is included, that a two-hierarchy configuration is achieved by using a first reflection optical system 302, a second reflection optical system 304, and a third reflection optical system 306, and that a compositing optical element 311 is disposed in a second hierarchy.

As illustrated in FIG. 21, the lens-barrel device 300 includes an imaging lens 301 that directs an optical axis in the vertical direction, an optical system that includes the first reflection optical system 302 and the second reflection optical system 304, and is disposed in a first hierarchy, an optical system that includes the third reflection optical system 306, and is disposed in the second hierarchy, and a mirror 314 that is mounted on a shaft of a not-illustrated rotational movement unit that rotationally moves the eyepiece 30 in a tilt direction.

In the lens-barrel device 300, similarly, the imaging lens 301 is disposed in a position closest to the microscope body in the lens-barrel device 300. Furthermore, the lens-barrel device 300 includes, as the optical system disposed in the first hierarchy, the first reflection optical system 302, a mirror 303, and the second reflection optical system 304. Furthermore, the lens-barrel device 300 includes, as the optical system disposed in the second hierarchy, the third reflection optical system 306, the relay lens 307, a mirror 308, a projection lens 310, the compositing optical element 311, the relay lens 312, and a mirror 313. Furthermore, a projector 309 is also disposed in the second hierarchy. Note that a field stop 305 is provided between the first hierarchy and the second hierarchy.

In the lens-barrel device 300, planar reflection in the vertical plane occurs in the mirror 313 and the mirror 314 for adjusting the height of an eye point, in addition to the first reflection optical system 302, the second reflection optical system 304, and the third reflection optical system 306 that achieve the two-hierarchy configuration. Stated another way, planar reflection occurs odd-numbered times, five times in total. As a result of this, an erect image formed by performing image formation twice can be vertically inverted. In this point, the lens-barrel device 300 is similar to the lens-barrel device 100 and the lens-barrel device 200.

Furthermore, in the lens-barrel device 300, planar reflection in the horizontal plane occurs in the mirror 303 that is provided in the first hierarchy, and the mirror 308 and the compositing optical element 311 that are provided in the second hierarchy. Stated another way, planar reflection occurs odd-numbered times, three times in total. As a result of this, an erect image formed by performing image formation twice can also be horizontally inverted. Accordingly, the lens-barrel device 300 can vertically and horizontally invert an erect image formed by performing image formation twice, and can finally output an inverted image. In this point, the lens-barrel device 300 is similar to the lens-barrel device 100 and the lens-barrel device 200.

Moreover, the lens-barrel device 300 is also similar to the lens-barrel device 100 and the lens-barrel device 200 in that a 4-shaped light path is formed by using a pair of reflection surfaces, and this causes planar reflection in the horizontal plane to occur odd-numbered times. However, the lens-barrel device 300 is different from the lens-barrel device 100 and the lens-barrel device 200 in that the pair of reflection surfaces are constituted by reflection surfaces included in the mirror 308 and the compositing optical element 311 that are disposed in the second hierarchy. Stated another way, the lens-barrel device 300 is different from the lens-barrel device 100 and the lens-barrel device 200 in that the pair of reflection surfaces are disposed in the second hierarchy, and one of the pair of reflection surface is provided in the compositing optical element 311.

The lens-barrel device 300 configured as described above can exhibit effects that are similar to effects of the lens-barrel device 100 and the lens-barrel device 200. Furthermore, by employing the lens-barrel device 300, one of the pair of reflection surfaces is provided in the compositing optical element 311, and this enables a decrease in the number of parts in comparison with the lens-barrel device 100 and the lens-barrel device 200.

### (Fourth Embodiment)

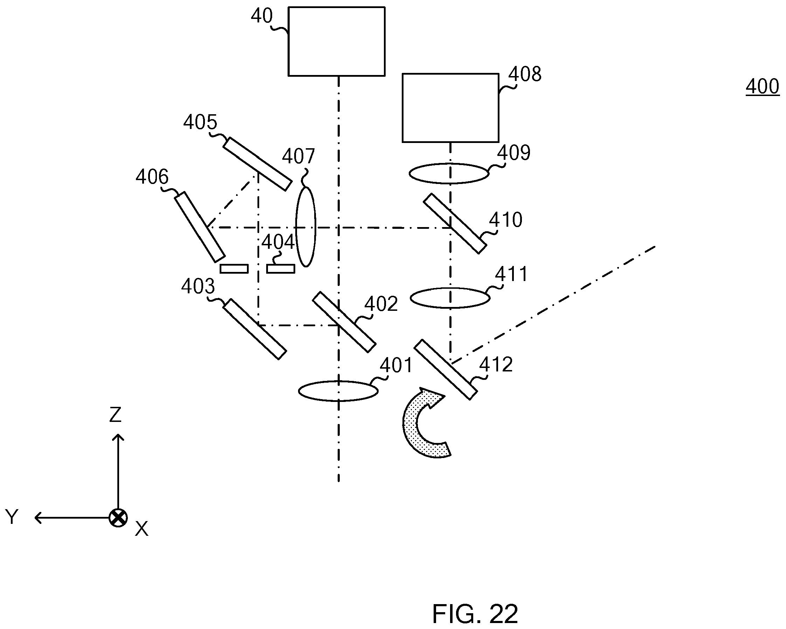

FIG. 22 is a side view illustrating a configuration of the lens-barrel device 400 according to the present embodiment. The configuration of the lens-barrel device 400 is described with reference to FIG. 22.

The lens-barrel device 400 is a lens-barrel device that is attachable to a microscope body, and is an erect image lens-barrel device that forms an erect image used for industrial purposes. In this point, the lens-barrel device 400 is different from the lens-barrel device 100 to the lens-barrel device 300. Furthermore, the lens-barrel device 400 is a trinocular lens-barrel that the eyepiece 30 and the imaging device 40 are attached to. In this point, the lens-barrel device 400 is similar to the lens-barrel device 100 to the lens-barrel device 300.

The lens-barrel device 400 is similar to the lens-barrel device 100 to the lens-barrel device 300 in that a relay optical system (a relay lens 407 and a relay lens 411) is included, that a two-hierarchy configuration is achieved by using a first reflection optical system 402, a second reflection optical system 403, and a third reflection optical system 406, and that a compositing optical element 410 is disposed in a second hierarchy.

As illustrated in FIG. 22, the lens-barrel device 400 includes an imaging lens 401 that directs an optical axis in the vertical direction, an optical system that includes the first reflection optical system 402 and the second reflection optical system 403, and is disposed in a first hierarchy, an optical system that includes the third reflection optical system 406, and is disposed in the second hierarchy, and a mirror 412 that is mounted on a shaft of a not-illustrated rotational movement unit that rotationally moves the eyepiece 30 in a tilt direction.

In the lens-barrel device 400, similarly, the imaging lens 401 is disposed in a position closest to the microscope body in the lens-barrel device 400. Furthermore, the lens-barrel device 400 includes, as the optical system disposed in the first hierarchy, the first reflection optical system 402 and the second reflection optical system 403. Furthermore, the lens-barrel device 400 includes, as the optical system disposed in the second hierarchy, the third reflection optical system 406, the relay lens 407, and the compositing optical element 410. The relay lens 411 is provided between the compositing optical element 410 and the mirror 412. A field stop 404 is provided between the first hierarchy and the second hierarchy.

A projector 408 and a projection lens 409 are disposed above the compositing optical element 410 that is disposed in the second hierarchy. In this point, the lens-barrel device 400 is different from the lens-barrel device 100 to the lens-barrel device 300. However, a configuration in which the projector 408 is disposed above the second hierarchy enables heat from the projector 408 to efficiently dissipate similarly to a configuration where the projector is disposed in the second hierarchy.

In the lens-barrel device 400, planar reflection in the horizontal plane does not occur. Therefore, the lens-barrel device 400 does not horizontally invert an erect image formed by performing image formation twice. Furthermore, in the lens-barrel device 400, planar reflection in the vertical plane occurs in the mirror 405 that includes a pair of reflection surfaces together with the third reflection optical system 406, and the compositing optical element 410 and the mirror 412 for adjusting the height of an eye point, in addition to the first reflection optical system 402, the second reflection optical system 403, and the third reflection optical system 406 that achieve the two-hierarchy configuration. Stated another way, planar reflection occurs even-numbered times, six times in total. As a result of this, the lens-barrel device 400 does not vertically invert an erect image formed by performing image formation twice. Accordingly, the lens-barrel device 400 does not vertically and horizontally invert an erect image formed by performing image formation twice, and can finally output the erect image.

By employing the lens-barrel device 400 configured as described above, an erect image lens-barrel is configured, and the AR display function can be provided while high ergonomic characteristics are maintained, similarly to the lens-barrel device 100 to the lens-barrel device 300. Furthermore, by employing the lens-barrel device 400, the compositing optical element 311 is used in planar reflection in the horizontal plane, and one of the pair of reflection surfaces is provided in the third reflection optical system 406, and this enables a decrease in the number of parts in comparison with the lens-barrel device 100 to the lens-barrel device 300.

The embodiments described above are specific examples for making the invention easily understandable, and the present invention is not limited to the embodiments described above. Variations of the embodiments described above and alternatives to the embodiments described above are to be included. In other words, variations can be made to the constituent elements in each of the embodiments without departing from the scope of the embodiment. Furthermore, new embodiments can be implemented by appropriately combining a plurality of constituent elements disclosed in one or more of the embodiments. Furthermore, some constituent elements may be omitted from the constituent elements described in each of the embodiments, or some constituent elements may be added to the constituent elements described in each of the embodiments. Moreover, the order of the processing procedure described in each of the embodiments may be changed as long as there is no contradiction. Stated another way, the lens-barrel device and the microscope system of the present invention can be variously modified and altered without departing from the scope as recited by the claims.

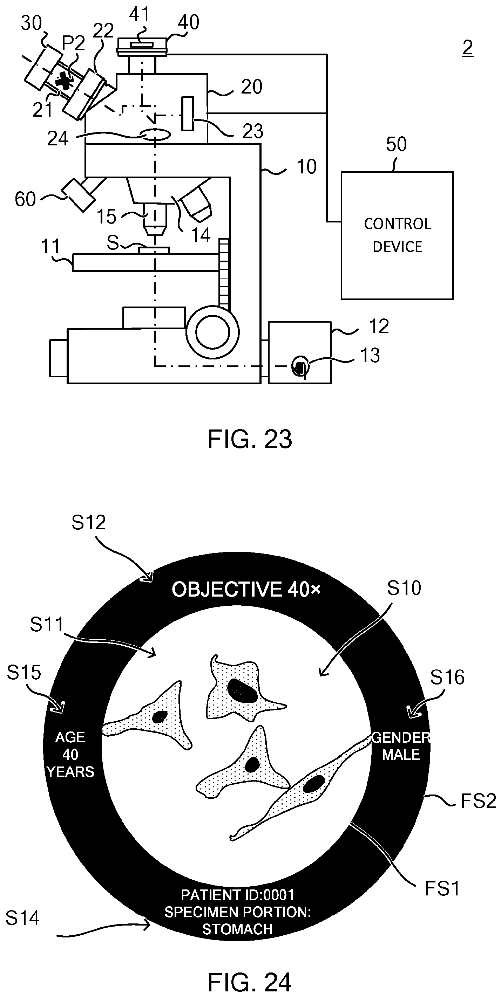

For example, the lens-barrel device according to the embodiment described above may be mounted in the microscope system 2 illustrated in FIG. 23 instead of the microscope system 1. FIG. 23 is a diagram illustrating a configuration of a microscope system according to another embodiment.

The microscope system 2 illustrated in FIG. 23 is different from the microscope system 1 in that a barcode reader 60 is included. In the other points, the microscope system 2 is similar to the microscope system 1. A pathological specimen is added with a barcode for specifying information relating to the specimen (for example, a portion from which the specimen has been extracted, age of a patient, or dyeing conditions) in many cases. By employing the microscope system 2, a barcode added to the specimen S may be read by using the barcode reader 60, and information relating to the specimen S may be obtained from an external system connected to the microscope system 2. Moreover, the obtained information may be projected as auxiliary information onto an image plane, as illustrated in FIG. 24.

FIG. 24 illustrates an example of an image observed through the eyepiece in the microscope system illustrated in FIG. 23. FIG. 24 illustrates a situation where information (specimen information S14, specimen information S15, and specimen information S16) relating to the specimen S has been projected onto the secondary image plane in addition to the analysis information S11 obtained by analyzing an image obtained by the imaging device 40, and the setting information S12 of the microscope system 2. The specimen information S14 is information relating to an ID of a patient from whom the specimen S has been extracted, and a portion from which the specimen S has been extracted. The specimen information S15 and the specimen information S16 are pieces of information relating to age and gender of the patient from whom the specimen S has been extracted. Note that it is desirable that these pieces of specimen information be projected outside the field of view FS1 and inside the field of view FS2 similarly to the setting information S12. No optical image has been projected onto this region, and therefore a background is black, and the setting information S12 can be displayed with high contrast.

Furthermore, the lens-barrel devices according to the embodiments described above have been described by using an example where an eyepiece unit is binocular, and stated another way, the eyepiece unit includes eyepieces for the right eye and for the left eye. However, the eyepiece unit of the lens-barrel device may be monocular.

## Claims

1. A lens-barrel device (20; 100; 200; 300; 400) that is attachable to a microscope body (10), the lens-barrel device (20; 100; 200; 300; 400) comprising:
an eyepiece sleeve (21) that an eyepiece (30) is attachable to;
an imaging lens (24; 101) that a light flux from the microscope body (10) is made incident on, the lens-barrel device (20; 100; 200; 300; 400) having been attached to the microscope body (10), and the light flux being a parallel light flux that has passed through an objective (15) attached to the microscope body (10);
a relay optical system (26; 106, 113) that relays a primary image to an object plane (P2) of the eyepiece (30) attached to the eyepiece sleeve (21), and forms a secondary image, the primary image having been formed by the imaging lens (24; 101);
a first reflection optical system (M1; 102) that reflects and bends the light flux from the imaging lens (24; 101) in a first horizontal direction;
a second reflection optical system (M2; 107; 208) that is disposed on a first horizontal plane where the first reflection optical system (M1; 102) is disposed, the second reflection optical system (M2; 107; 208) reflecting and bending the light flux that has passed through the first reflection optical system (M1; 102), in a vertically upward direction;
a third reflection optical system (M3; 108) that is disposed on a second horizontal plane that is different from the first horizontal plane, the third reflection optical system (M3; 108; 209; 406) reflecting and bending the light flux that has passed through the second reflection optical system (M2; 107; 208), in a second horizontal direction;
an additional optical system (27; 110) that transmits a light flux from a projector for forming an image that is different from the secondary image, on the object plane (P2) of the eyepiece (30); and
an optical element (M4, 28; 111; 311) that is disposed on the second horizontal plane, and guides the light flux from the additional optical system (27; 110) to a light path to the object plane (P2) of the eyepiece (30).

2. The lens-barrel device (300) according to claim 1, further comprising
a pair of reflection surfaces (308, 311) that are disposed on the first horizontal plane or the second horizontal plane, and reflect the light flux that travels in a horizontal direction, the pair of reflection surfaces (308, 311) making a direction of an emitted light flux different from the direction of an incident light flux by 90 degrees in a horizontal plane.

3. The lens-barrel device (300) according to claim 2, wherein
the pair of reflection surfaces (308, 311) are disposed on the second horizontal plane, and
one of the pair of reflection surfaces (308, 311) is provided in the optical element (311).

4. The lens-barrel device (100) according to claim 2 or 3, wherein
one of the pair of reflection surfaces (103, 105) is disposed in one of two regions sectioned by a plane including an optical axis of the imaging lens (101) and a center line of the eyepiece (30), and
at least one of the second reflection optical system (107) and the third reflection optical system (108) is disposed in another of the two regions sectioned by the plane including the optical axis of the imaging lens (101) and the center line of the eyepiece (30).

5. The lens-barrel device (100; 200; 400) according to claim 1, further comprising
a pair of reflection surfaces (102, 107, 108; 208, 209; 405, 406) that are disposed on a vertical plane that is orthogonal to the first horizontal plane, and reflect the light flux that travels in a vertical direction, the pair of reflection surfaces (102, 107, 108; 208, 209; 405, 406) making a direction of an emitted light flux different from the direction of an incident light flux by 90 degrees in the vertical plane.

6. The lens-barrel device (100; 200; 400) according to claim 5, wherein
one of the pair of reflection surfaces (102, 107, 108; 208, 209; 405, 406) is provided in the first reflection optical system (102), the second reflection optical system (107; 208) or the third reflection optical system (108; 209; 406).

7. The lens-barrel device (100) according to claim 1, wherein
the lens-barrel device (100) is a trinocular lens-barrel that an imaging device (40) is attached to, and
the first reflection optical system (102) is a beam splitter that reflects and bends part of the light flux from the imaging lens (101) in the first horizontal direction, and transmits and guides the part of the light flux from the imaging lens (101) to the imaging device (40).

8. The lens-barrel device (100) according to claim 7, wherein
the first horizontal direction is a direction that goes from a front surface of the lens-barrel device (100) provided with the eyepiece sleeve (21) to a back surface of the lens-barrel device (100).

9. The lens-barrel device (100) according to claim 7 or 8, further comprising
a light path switching mechanism (130) that houses a plurality of optical elements (132, 133, 134), and selectively disposes any of the plurality of optical elements (132, 133, 134) in a position where a light path to the eyepiece (30) crosses the light path to the imaging device (40),
wherein the plurality of optical elements (132, 133, 134) includes the first reflection optical system (102).

10. The lens-barrel device (100) according to claim 1, further comprising:
a rotational movement unit (22) that is provided with the eyepiece sleeve (21), and rotationally moves in a tilt direction around a shaft in a horizontal direction; and
a reflection member (115) that is mounted on the shaft of the rotational movement unit (22), and rotates around the shaft by half an amount of rotational movement of the rotational movement unit (22).

11. The lens-barrel device (100) according to claim 10, further comprising
a reflection surface (114) that is disposed on the second horizontal plane, and reflects the light flux toward the reflection member (115) in a downward direction, the light flux having passed through the third reflection optical system (108).

12. The lens-barrel device (100) according to claim 11, wherein
the reflection surface (114) is provided in the optical element.

13. The lens-barrel device (20) according to claim 1, wherein
the relay optical system (26) includes:
a first relay lens (26a) that converts the light flux into a parallel light flux, the light flux having passed through the first reflection optical system (M1); and
a second relay lens (26b) that the parallel light flux is made incident on, and
the optical element (M4, 28) is disposed on a light path between the first relay lens (26a) and the second relay lens (26b).

14. The lens-barrel device (100) according to claim 1, further comprising:
a first field stop (104) that is disposed on a primary image plane (P1) on which the imaging lens (101) forms the primary image; and
a second field stop (31) that is disposed on a secondary image plane (P2) on which the relay optical system (106, 113) forms the secondary image,
wherein an image that is formed on the secondary image plane (P2) and indicates an opening of the first field stop (104) is smaller than the opening of the second field stop (31).

15. A microscope system (1) comprising:
a microscope body (10);
an objective (15);
an eyepiece (30);
an imaging device; and
a lens-barrel device (20; 100; 200; 300; 400) that is attachable to the microscope body (10),
wherein the lens-barrel device (20; 100; 200; 300; 400) includes:
an eyepiece sleeve (21) that the eyepiece (30) is attachable to;
an imaging lens (24; 101) that a light flux from the microscope body (10) is made incident on, the lens-barrel device (20; 100; 200; 300; 400) having been attached to the microscope body (10), and the light flux being a parallel light flux that has passed through the objective (15) attached to the microscope body (10);
a relay optical system (26) that relays a primary image to an object plane (P2) of the eyepiece (30) attached to the eyepiece sleeve (21), and forms a secondary image, the primary image having been formed by the imaging lens (24; 101);
a first reflection optical system (M1) that reflects and bends the light flux from the imaging lens (24; 101) in a first horizontal direction;
a second reflection optical system (M2; 107) that is disposed on a first horizontal plane where the first reflection optical system (M1) is disposed, the second reflection optical system (M2; 107) reflecting and bending the light flux that has passed through the first reflection optical system (M1), in a vertically upward direction;
a third reflection optical system (M3; 108; 209; 406) that is disposed on a second horizontal plane that is different from the first horizontal plane, the third reflection optical system (M3; 108; 209; 406) reflecting and bending the light flux that has passed through the second reflection optical system (M2; 107), in a second horizontal direction;
an additional optical system (27; 110) that transmits a light flux from a projector for forming an image that is different from the secondary image, on the object plane (P2) of the eyepiece (30); and
an optical element (M4, 28; 111) that is disposed on the second horizontal plane, and guides the light flux from the additional optical system (27; 110) to a light path to the object plane (P2) of the eyepiece (30).

## Patentansprüche

1. Linsenaufnahmevorrichtung (20; 100; 200; 300; 400), die an einem Mikroskopkörper (10) befestigbar ist, wobei die insenaufnahmevorrichtung (20; 100; 200; 300; 400) umfasst:
eine Okularhülse (21), an der ein Okular (30) befestigbar ist;
eine Abbildungslinse (24; 101), auf die ein Lichtfluss von dem Mikroskopkörper (10) auftrifft, wobei die Linsenaufnahmevorrichtung (20; 100; 200; 300; 400) an dem Mikroskopkörper (10) angebracht ist und der Lichtfluss ein paralleler Lichtfluss ist, der durch ein an dem Mikroskopkörper (10) angebrachtes Objektiv (15) hindurchgegangen ist;
ein Relaisoptiksystem (26; 106, 113), das ein Primärbild an eine Objektebene (P2) des an der Okularhülse (21) angebrachten Okulars (30) weiterleitet und ein Sekundärbild erzeugt, wobei das Primärbild durch die Abbildungslinse (24; 101) erzeugt wurde;
ein erstes Reflexionsoptiksystem (M1; 102), das den Lichtfluss von der Abbildungslinse (24; 101) in einer ersten horizontalen Richtung reflektiert und ablenkt;
ein zweites Reflexionsoptiksystem (M2; 107; 208), das auf einer ersten horizontalen Ebene angeordnet ist, auf der das erste Reflexionsoptiksystem (M1; 102) angeordnet ist, wobei das zweite Reflexionsoptiksystem (M2; 107; 208) den Lichtfluss, der das erste Reflexionsoptiksystem (M1; 102) passiert hat, in einer vertikal nach oben gerichteten Richtung reflektiert und ablenkt;
ein drittes Reflexionsoptiksystem (M3; 108), das auf einer zweiten horizontalen Ebene angeordnet ist, die sich von der ersten horizontalen Ebene unterscheidet, wobei das dritte Reflexionsoptiksystem (M3; 108; 209; 406) den Lichtfluss, der durch das zweite Reflexionsoptiksystem (M2; 107; 208) hindurchgegangen ist, in einer zweiten horizontalen Richtung reflektiert und ablenkt;
ein zusätzliches optisches System (27; 110), das einen Lichtfluss von einem Projektor zur Bildung eines Bildes, das sich von dem Sekundärbild unterscheidet, auf die Objektebene (P2) des Okulars (30) überträgt; und
ein optisches Element (M4, 28; 111; 311), das auf der zweiten horizontalen Ebene angeordnet ist und den Lichtfluss von dem zusätzlichen optischen System (27; 110) zu einem Lichtpfad zur Objektebene (P2) des Okulars (30) leitet.

2. Linsenaufnahmevorrichtung (300) gemäß Anspruch 1, die ferner
ein Paar von Reflexionsflächen (308, 311) umfasst, die auf der ersten horizontalen Ebene oder der zweiten horizontalen Ebene angeordnet sind und den sich in horizontaler Richtung ausbreitenden Lichtfluss reflektieren, wobei das Paar von Reflexionsflächen (308, 311) eine Richtung eines emittierten Lichtflusses um 90 Grad in einer horizontalen Ebene von der Richtung eines einfallenden Lichtflusses ändern.

3. Linsenaufnahmevorrichtung (300) gemäß Anspruch 2, wobei
das Paar von Reflexionsflächen (308, 311) auf der zweiten horizontalen Ebene angeordnet ist und
eine des Paars von Reflektionsflächen (308, 311) in dem optischen Element (311) vorgesehen ist.

4. Linsenaufnahmevorrichtung (100) gemäß Anspruch 2 oder 3, wobei
eine des Paars von Reflexionsflächen (103, 105) in einem von zwei Bereichen angeordnet ist, die durch eine Ebene geteilt sind, die eine optische Achse der Abbildungslinse (101) und eine Mittellinie des Okulars (30) enthält, und
das zweite Reflexionsoptiksystem (107) und/oder das dritte Reflexionsoptiksysteme (108) in einem anderen der zwei Bereiche angeordnet ist, die durch die Ebene unterteilt sind, die die optische Achse der Abbildungslinse (101) und die Mittellinie des Okulars (30) enthält.

5. Linsenaufnahmevorrichtung (100; 200; 400) gemäß Anspruch 1, die ferner ein Paar von Reflexionsflächen (102, 107, 108; 208, 209; 405, 406) umfasst, die auf einer vertikalen Ebene angeordnet sind, die orthogonal zu der ersten horizontalen Ebene ist, und den sich in vertikaler Richtung ausbreitenden Lichtfluss reflektieren, wobei das Paar von Reflexionsflächen (102, 107, 108; 208, 209; 405, 406) eine Richtung eines emittierten Lichtflusses um 90 Grad in der vertikalen Ebene von der Richtung eines einfallenden Lichtflusses ändert.

6. Linsenaufnahmevorrichtung (100; 200; 400) gemäß Anspruch 5, wobei
eine des Paars von Reflexionsoberflächen (102, 107, 108; 208, 209; 405, 406) in dem ersten Reflexionsoptiksystem (102), dem zweiten Reflexionsoptiksystem (107; 208) oder dem dritten Reflexionsoptiksystem (108; 209; 406) vorgesehen ist.

7. Linsenaufnahmevorrichtung (100) gemäß Anspruch 1, wobei
die Linsenaufnahmevorrichtung (100) eine trinokulare Linsenaufnahmevorrichtung ist, an der eine Abbildungsvorrichtung (40) angebracht ist, und
das erste Reflexionsoptiksystem (102) ein Strahlteiler ist, der einen Teil des Lichtflusss von der Abbildungslinse (101) in der ersten horizontalen Richtung ( ) reflektiert und ablenkt und den Teil des Lichtflusss von der Abbildungslinse (101) zu der Abbildungsvorrichtung (40) durchlässt und leitet.

8. Linsenaufnahmevorrichtung (100) gemäß Anspruch 7, wobei
die erste horizontale Richtung eine Richtung ist, die von einer Vorderseite der Linsenaufnahmevorrichtung (100), die mit der Okularhülse (21) versehen ist, zu einer Rückseite der Linsenaufnahmevorrichtung (100) verläuft.

9. Linsenaufnahmevorrichtung (100) gemäß Anspruch 7 oder 8, die ferner
einen Lichtpfad-Umschaltmechanismus (130) umfasst, der eine Mehrzahl von optischen Elementen (132, 133, 134) aufnimmt und selektiv eines der Mehrzahl von optischen Elementen (132, 133, 134) an einer Position anordnet, an der ein Lichtpfad zu dem Okular (30) den Lichtpfad zu der Bildgebungsvorrichtung (40) kreuzt,
wobei die Mehrzahl von optischen Elementen (132, 133, 134) das erste Reflexionsoptiksystem (102) umfasst.

10. Linsenaufnahmevorrichtung (100) gemäß Anspruch 1, die ferner umfasst:
eine Drehbewegungseinheit (22), die mit der Okularhülse (21) versehen ist und sich in einer Neigungsrichtung um eine Welle in horizontaler Richtung dreht; und
ein Reflexionselement (115), das auf der Welle der Drehbewegungseinheit (22) angebracht ist und sich um die Hälfte der Drehbewegung der Drehbewegungseinheit (22) um die Welle dreht.

11. Linsenaufnahmevorrichtung (100) gemäß Anspruch 10, die ferner umfasst
eine Reflexionsfläche (114), die auf der zweiten horizontalen Ebene angeordnet ist und den Lichtfluss in Abwärtsrichtung zu dem Reflexionselement (115) reflektiert, wobei der Lichtfluss durch das dritte Reflexionsoptiksystem (108) hindurchgegangen ist.

12. Linsenaufnahmevorrichtung (100) gemäß Anspruch 11, wobei
die Reflexionsfläche (114) in dem optischen Element vorgesehen ist.

13. Linsenaufnahmevorrichtung (20) gemäß Anspruch 1, wobei
das Relaisoptiksystem (26) umfasst:
eine erste Relaislinse (26a), die den Lichtfluss in einen parallelen Lichtfluss umwandelt, wobei der Lichtfluss durch das erste Reflexionsoptiksystem (M1) hindurchgegangen ist; und
eine zweite Relaislinse (26b), auf die der parallele Lichtfluss einfällt, und wobei
das optische Element (M4, 28) auf einem Lichtpfad zwischen der ersten Relaislinse (26a) und der zweiten Relaislinse (26b) angeordnet ist.

14. Linsenaufnahmevorrichtung (100) gemäß Anspruch 1, die ferner umfasst:
eine erste Feldblende (104), die auf einer Primärbildebene (P1) angeordnet ist, auf der die Abbildungslinse (101) das Primärbild erzeugt; und
eine zweite Feldblende (31), die auf einer sekundären Bildebene (P2) angeordnet ist, auf der das Relaisoptiksystem (106, 113) das Sekundärbild erzeugt,
wobei ein Bild, das auf der sekundären Bildebene (P2) gebildet wird und eine Öffnung der ersten Feldblende (104) anzeigt, kleiner ist als die Öffnung der zweiten Feldblende (31).

15. Mikroskopsystem (1), das umfasst:
einen Mikroskopkörper (10);
ein Objektiv (15);
ein Okular (30);
eine Abbildungsvorrichtung; und
eine Linsenaufnahmevorrichtung (20; 100; 200; 300; 400), die an dem Mikroskopkörper (10) befestigbar ist,
wobei die Linsenaufnahmevorrichtung (20; 100; 200; 300; 400) umfasst:
eine Okularhülse (21), an der das Okular (30) befestigbar ist;
eine Abbildungslinse (24; 101), auf die ein Lichtfluss von dem Mikroskopkörper (10) auftrifft, wobei die Linsenaufnahmevorrichtung (20; 100; 200; 300; 400) an dem Mikroskopkörper (10) angebracht ist und der Lichtfluss ein paralleler Lichtfluss ist, der durch das an dem Mikroskopkörper (10) angebrachte Objektiv (15) hindurchgegangen ist;
ein Relaisoptiksystem (26), das ein Primärbild an eine Objektebene (P2) des an der Okularhülse (21) angebrachten Okulars (30) weiterleitet und ein Sekundärbild erzeugt, wobei das Primärbild durch die Abbildungslinse (24; 101) erzeugt wurde;
ein erstes Reflexionsoptiksystem (M1), das den Lichtfluss von der Abbildungslinse (24; 101) in einer ersten horizontalen Richtung reflektiert und ablenkt;
ein zweites Reflexionsoptiksystem (M2; 107), das auf einer ersten horizontalen Ebene angeordnet ist, auf der das erste Reflexionsoptiksystem (M1) angeordnet ist, wobei das zweite Reflexionsoptiksystem (M2; 107) den Lichtfluss, der durch das erste Reflexionsoptiksystem (M1) hindurchgegangen ist, in einer vertikal nach oben gerichteten Richtung reflektiert und ablenkt;
ein drittes Reflexionsoptiksystem (M3; 108; 209; 406), das auf einer zweiten horizontalen Ebene angeordnet ist, die sich von der ersten horizontalen Ebene unterscheidet, wobei das dritte Reflexionsoptiksystem (M3; 108; 209; 406) den Lichtfluss , der durch das zweite Reflexionsoptiksystem (M2; 107) hindurchgegangen ist, in einer zweiten horizontalen Richtung reflektiert und ablenkt;
ein zusätzliches optisches System (27; 110), das den Lichtfluss von einem Projektor zur Bildung eines Bildes, das sich von dem Sekundärbild unterscheidet, auf die Objektebene (P2) des Okulars (30) überträgt; und
ein optisches Element (M4, 28; 111), das auf der zweiten horizontalen Ebene angeordnet ist und den Lichtfluss von dem zusätzlichen optischen System (27; 110) zu einem Lichtpfad zur Objektebene (P2) des Okulars (30) leitet.

## Revendications

1. Dispositif formant barillet de lentille (20; 100; 200; 300; 400) pouvant être fixé à un corps de microscope (10), le dispositif formant barillet d'objectif (20; 100; 200; 300; 400) comprenant:
un tube porte-oculaire (21) sur lequel peut être fixé un oculaire (30);
une lentille d'imagerie (24; 101) sur laquelle un flux lumineux provenant du corps du microscope (10) est rendu incident, le dispositif formant barillet de lentille (20; 100; 200; 300; 400) ayant été fixé au corps du microscope (10), et le flux lumineux étant un flux lumineux parallèle qui a traversé un objectif (15) fixé au corps de microscope (10);
un système optique relais (26; 106, 113) qui relaie une image primaire à un plan d'objet (P2) de l'oculaire (30) fixé au tube porte-oculaire (21), et forme une image secondaire, l'image primaire ayant été formée par la lentille d'imagerie (24; 101);
un premier système optique de réflexion (M1; 102) qui réfléchit et courbe le flux lumineux provenant de la lentille d'imagerie (24; 101) dans une première direction horizontale;
un deuxième système optique de réflexion (M2; 107; 208) disposé sur un premier plan horizontal où est disposé le premier système optique de réflexion (M1; 102), le deuxième système optique de réflexion (M2; 107; 208) réfléchissant et courbant le flux lumineux qui a traversé le premier système optique de réflexion (M1; 102), dans une direction verticale vers le haut;
un troisième système optique de réflexion (M3; 108) disposé sur un deuxième plan horizontal différent du premier plan horizontal, le troisième système optique de réflexion (M3; 108; 209; 406) réfléchissant et courbant le flux lumineux qui a traversé le deuxième système optique de réflexion (M2; 107; 208), dans une deuxième direction horizontale;
un système optique supplémentaire (27; 110) qui transmet un flux lumineux provenant d'un projecteur pour former une image différente de l'image secondaire, sur le plan d'objet (P2) de l'oculaire (30); et
un élément optique (M4, 28; 111; 311) disposé sur le second plan horizontal et guidant le flux lumineux provenant du système optique supplémentaire (27; 110) vers un chemin lumineux menant au plan d'objet (P2) de l'oculaire (30).

2. Dispositif formant barillet de lentille (300) selon la revendication 1, comprenant en outre
une paire de surfaces de réflexion (308, 311) disposées sur le premier plan horizontal ou le second plan horizontal, et réfléchissant le flux lumineux qui se déplace dans une direction horizontale, la paire de surfaces de réflexion (308, 311) faisant en sorte que la direction d'un flux lumineux émis diffère de la direction d'un flux lumineux incident de 90 degrés dans un plan horizontal.

3. Dispositif formant barillet de lentille (300) selon la revendication 2, dans lequel
la paire de surfaces de réflexion (308, 311) est disposée sur le second plan horizontal, et
l'une parmi la paire de surfaces de réflexion (308, 311) est disposée dans l'élément optique (311).

4. Dispositif formant barillet de lentille (100) selon la revendication 2 ou 3, dans lequel
l'une parmi la paire de surfaces de réflexion (103, 105) est disposée dans l'une des deux régions sectionnées par un plan comprenant un axe optique de la lentille d'imagerie (101) et une ligne centrale de l'oculaire (30), et
au moins l'un parmi le deuxième système optique de réflexion (107) et le troisième système optique de réflexion (108) est disposé dans une autre des deux régions sectionnées par le plan comprenant l'axe optique de la lentille d'imagerie (101) et la ligne centrale de l'oculaire (30).

5. Dispositif formant barillet de lentille (100; 200; 400) selon la revendication 1, comprenant en outre
une paire de surfaces de réflexion (102, 107, 108; 208, 209; 405, 406) disposées sur le plan vertical qui est orthogonal au premier plan horizontal, et réfléchissant le flux lumineux qui se déplace dans une direction verticale, la paire des surfaces de réflexion (102, 107, 108; 208, 209; 405, 406) faisant en sorte que la direction d'un flux lumineux émis diffère de la direction d'un flux lumineux incident de 90 degrés dans un plan vertical.

6. Dispositif formant barillet de lentille (100; 200; 400) selon la revendication 5, dans lequel
l'une parmi la paire de surfaces de réflexion (102, 107, 108; 208, 209; 405, 406) est disposée dans le premier système optique de réflexion (102), le deuxième système optique de réflexion (107; 208) ou le troisième système optique de réflexion (108; 209; 406).

7. Dispositif formant barillet de lentille (100) selon la revendication 1, dans lequel
le dispositif formant barillet de lentille (100) est un barillet de lentille trinoculaire auquel est fixé un dispositif d'imagerie (40), et
le premier système optique de réflexion (102) est un séparateur de faisceau qui réfléchit et courbe une partie du flux lumineux provenant de la lentille d'imagerie (101) dans la première direction horizontale, et transmet et guide la partie du flux lumineux provenant de la lentille d'imagerie (101) vers le dispositif d'imagerie (40).

8. Dispositif formant barillet de lentille (100) selon la revendication 7, dans lequel
la première direction horizontale est une direction qui part d'une surface avant du dispositif formant barillet de lentille (100) doté d'un tube porte-oculaire (21) jusqu'à une surface arrière du dispositif format barillet de lentille (100).

9. Dispositif formant barillet de lentille (100) selon la revendication 7 ou 8, comprenant en outre
un mécanisme de commutation de trajet lumineux (130) qui contient une pluralité d'éléments optiques (132, 133, 134) et dispose sélectivement l'un de la pluralité des éléments optiques (132, 133, 134) dans une position où le trajet lumineux vers l'oculaire (30) croise le trajet lumineux vers le dispositif d'imagerie (40),
dans lequel la pluralité des éléments optiques (132, 133, 134) comprend le premier système optique de réflexion (102).

10. Dispositif formant barillet de lentille (100) selon la revendication 1, comprenant en outre:
une unité de mouvement rotatif (22) qui est dotée du tube porte-oculaire (21), et qui se déplace par rotation dans la direction d'inclinaison autour d'un arbre dans une direction horizontale; et
un élément de réflexion (115) qui est monté sur l'arbre de l'unité de mouvement rotatif (22) et qui tourne autour de l'arbre à raison d'un demi-tour de l'unité de mouvement rotatif (22).

11. Dispositif formant barillet de lentille (100) selon la revendication 10, comprenant en outre
une surface de réflexion (114) qui est disposée sur le second plan horizontal et qui réfléchit le flux lumineux vers l'élément de réflexion (115) vers le bas, le flux lumineux ayant traversé le troisième système optique de réflexion (108).

12. Dispositif formant barillet de lentille (100) selon la revendication 11, dans lequel
la surface de réflexion (114) est disposée dans l'élément optique.

13. Dispositif formant barillet de lentille (20) selon la revendication 1, dans lequel
le système optique relais (26) comprend:
une première lentille relais (26a) qui convertit le flux lumineux en un flux lumineux parallèle, le flux lumineux ayant traversé le premier système optique de réflexion (M1); et
une seconde lentille relais (26b) sur laquelle le flux de lumière parallèle est rendu incident, et
l'élément optique (M4, 28) est disposé sur un trajet lumineux entre la première lentille relais (26a) et la seconde lentille relais (26b).

14. Dispositif formant barillet de lentille (100) selon la revendication 1, comprenant en outre:
un premier diaphragme de champ (104) disposé sur un plan d'image primaire (P1) sur lequel la lentille d'imagerie (101) forme l'image primaire; et
un deuxième diaphragme de champ (31) disposé sur un plan d'image secondaire (P2) sur lequel le système optique relais (106, 113) forme l'image secondaire,
dans lequel une image formée sur le plan d'image secondaire (P2) et indiquant une ouverture du premier diaphragme de champ (104) est plus petite que l'ouverture du deuxième diaphragme de champ (31).

15. Système de microscope (1) comprenant:
un corps de microscope (10);
un objectif (15);
un oculaire (30);
un dispositif d'imagerie; et
un dispositif formant barillet de lentille (20; 100; 200; 300; 400) qui peut être fixé au corps de microscope (10),
dans lequel le dispositif format barillet de lentille (20; 100; 200; 300; 400) comprend:
un tube porte-oculaire (21) sur lequel peut être fixé un oculaire (30);
une lentille d'imagerie (24; 101) sur laquelle un flux lumineux provenant du corps du microscope (10) est rendu incident, le dispositif formant barillet de lentille (20; 100; 200; 300; 400) ayant été fixé au corps du microscope (10), et le flux lumineux étant un flux lumineux parallèle qui a traversé un objectif (15) fixé au corps de microscope (10);
un système optique relais (26) qui relaie une image primaire à un plan d'objet (P2) de l'oculaire (30) fixé au tube porte-oculaire (21), et forme une image secondaire, l'image primaire ayant été formée par la lentille d'imagerie (24; 101);
un premier système optique de réflexion (M1) qui réfléchit et courbe le flux lumineux provenant de la lentille d'imagerie (24; 101) dans une première direction horizontale;
un deuxième système optique de réflexion (M2; 107) disposé sur un premier plan horizontal où est disposé le premier système optique de réflexion (M1; 102), le deuxième système optique de réflexion (M2; 107) réfléchissant et courbant le flux lumineux qui a traversé le premier système optique de réflexion (M1), dans une direction verticale vers le haut;
un troisième système optique de réflexion (M3; 108; 209; 406) disposé sur un deuxième plan horizontal différent du premier plan horizontal, le troisième système optique de réflexion (M3; 108; 209; 406) réfléchissant et courbant le flux lumineux qui a traversé le deuxième système optique de réflexion (M2; 107), dans une deuxième direction horizontale;
un système optique supplémentaire (27; 110) qui transmet un flux lumineux provenant d'un projecteur pour former une image différente de l'image secondaire, sur le plan d'objet (P2) de l'oculaire (30); et
un élément optique (M4, 28; 111) disposé sur le second plan horizontal et guidant le flux lumineux provenant du système optique supplémentaire (27; 110) vers un chemin lumineux menant au plan d'objet (P2) de l'oculaire (30).
